# EUROPEAN PATENT APPLICATION

(11) **EP 3 789 001 A1**
(43) Date of publication of application: **10.03.2021**
(21) Application number: 19834136.4
(22) Date of filing: 03.07.2019
(51) Int. Cl.: A61G 5/04, G08G 1/16

(54) **ELECTRIC MOBILITY APPARATUS**

(30) Priority: 13.07.2018 JP 2018133239; 25.12.2018 JP 2018240726
(71) Applicant: Whill, Inc., Tokyo 140-0002 (JP)
(72) Inventor: TAKEI, Yusuke, Yokohama-shi, Kanagawa 230-0045 (JP); SHIMIZU, Seiya, Yokohama-shi, Kanagawa 230-0045 (JP); TSUKAMOTO, Hiroyuki, Yokohama-shi, Kanagawa 230-0045 (JP)
(74) Representative: Reeve, Nicholas Edward
(86) International application number: PCT/JP2019/026404
(87) International publication number: WO 2020/013043

(57) **Abstract**

An electric mobility vehicle including a mobility body 30, wheels 10, 20 provided at both sides in a vehicle width direction of the mobility body 30, and a sensor 90 attached to the mobility body 30. An area which is located outside the wheel 10, 20 in the vehicle width direction, and at least one of a part of the wheel 10, 20, and a part of the fender 32c of the wheel are positioned within a detection area DA of the sensor.

## Description

### {Technical Field}

This invention relates to an electric mobility vehicle.

### {Background Art}

As this kind of electric mobility vehicle, there is a known electric mobility vehicle including a camera which captures images of a travel surface located at a front side of the front wheels, and a control section which controls the electric mobility vehicle on the basis of the images of the travel surface, which are received from the camera (see PTL 1, for example). The control section of this electric mobility vehicle is capable of detecting a bump in the images. When the control section detect the bump, the control section controls the electric mobility vehicle to stop, controls the electric mobility vehicle to avoid the bump, and the like.

Also, there is a known electric mobility vehicle including a sensor which can obtain information of an obstacle located at the front side, and a control section which controls the electric mobility vehicle (see PTL 2, for example). The control section of this electric mobility vehicle determines whether or not an obstacle exists in a travelling direction of the electric mobility vehicle on the basis of the information received from the sensor. And, when the control section determines that the obstacle exists in an estimated travelling direction, the control section changes the control method.

### {Citation List}

### {Patent Literature}

{PTL 1} Japanese Unexamined Patent Application, Publication No. 2011-177334
{PTL 2} Japanese Unexamined Patent Application, Publication No. 2015-166891

### {Summary of Invention}

### {Technical Problem}

Recently, an electric mobility vehicle whose front wheels are an omnidirectional wheels is on sale. The omnidirectional wheel is capable of moving in an axis direction thereof. For that reason, the electric mobility vehicle is used in various situations. When the front end side of the electric mobility vehicle moves toward the axis direction of the front wheels, the electric mobility vehicle turns around the rear end portion thereof, the central portion thereof, and the like. That is to say, in the electric mobility vehicle whose front wheels are the omnidirectional wheels, even when a technology in which the front side is monitored by a camera or a sensor is adopted, the turning movement of the electric mobility vehicle cannot be covered.

The electric mobility vehicle whose front wheels are the omnidirectional wheels can perform the turning movement. The turning movement is turning, a combination of turning and running, and the like. This kind of electric mobility vehicle can change directions even in a corridor in a house, in a narrow space between furniture and a wall, and the like. That is to say, in comparison with an electric mobility vehicle whose front wheels are not the omnidirectional wheels, the electric mobility vehicle whose front wheels are the omnidirectional wheels can be used in significantly many situations. In contrast, in the above described narrow space, when the electric mobility vehicle performs the turning movement, it is likely that the front wheel or the vicinity of the front wheel comes into contact with the wall, the furniture, and the like. In this case, the wall, furniture, and the like may be damaged.

The above described damage can be prevented when a driver keeps monitoring the surroundings of the front wheels of the electric mobility vehicle at all time. However, it cannot be said that everyone can perform this kind of monitoring perfectly. Also, even when the electric mobility vehicle performs the turning movement in a wide space, the driver needs to monitor whether or not there is a person or an obstacle around the electric mobility vehicle. In addition to this, there can be a bump, a gutter, and the like at the outside in the width direction of the front wheel. Since the bump, the gutter, and the like interrupt the turning movement, the driver needs to monitor the bump, the gutter, and the like as well.

Here, in order to monitor a state of an area located outside the right front wheel in the width direction and a state of an area located outside the left front wheel in the width direction, it is necessary to move the head of the driver largely toward the right side and the left side with respect to the electric mobility vehicle. However, it is not preferable that the driver moves his/her head toward the right side and the left side frequently. Also, it is difficult for some of the drivers to move his/her head toward the right side and the left side.

The present invention has been made considering the aforementioned circumstances, and a purpose of the present invention is to provide an electric mobility vehicle capable of certainly monitoring the area located outside the wheels in the width direction of the electric mobility vehicle, while reducing burden of the driver.

### {Solution to Problem}

An electric mobility vehicle according to a first aspect of the present invention is an electric mobility vehicle on which one person is to be seated to ride, the electric mobility vehicle comprises: a mobility body; wheels provided at both sides in a vehicle width direction of the mobility body; and a sensor attached to the mobility body, wherein an area, which is located outside the wheel in the vehicle width direction, and at least one of a part of the wheel and a part of fender of the wheel are positioned within a detection area of the sensor.

In the above described aspect, an area located outside of the wheel, which is an omnidirectional wheel, in the width direction and at least one of a part of the wheel and a part of fender of the wheel are positioned within the detection area of the sensor. The sensor is attached to the mobility body as described above, therefore, the detected result of the sensor is extremely advantageous for certainly grasping a relationship between an object to be avoided existing in the area and the wheel and the wheel. Note that, the objects to be avoided are a person, an obstacle, a wall, a gutter, furniture, and the like.

For example, in order to check the vicinities of the wheels on a travel surface located outside the wheel in the width direction by eyesight, the driver is required to change his or her posture. In contrast, when the vicinities of the wheels on the travel surface located outside the wheels in the width direction are positioned within the detection area of the sensor, the burden of monitoring by the driver can be reduced.

An electric mobility vehicle according to a second embodiment of the present invention includes the mobility body, the wheels which are provided at the both sides in the vehicle width direction of the mobility body, the sensor which is attached to the mobility body, a motor which drives another wheel, which is provided in the mobility body, or the above described wheels, and a control unit which controls the motor, the wheels are omnidirectional wheels, the area located outside the wheels in the vehicle width direction is positioned within the detection area of the sensor, and the control unit performs a predetermined evading operation when the control unit detects the object to be avoided located in the area at the outside, or located within a predetermined area in the detection area based on detected images or detected values of the sensor.

The omnidirectional wheels easily move toward the width direction, and the moved amount may be greater than the moved amount expected by the driver. In buildings, this kind of movement may cause the wheels to come into contact with furniture, wall, and the like. It is highly possible that the wheels are made of a material harder than that of the furniture, the wall, and the like, and therefore the above described contact may damage the furniture, wall, and the like. Also, at a platform in a station, at the vicinities of stairs, and the like, it is possible that the wheel is fallen.

Against the above described situations, in this aspect, the area located outside the wheels in the vehicle width direction is positioned in the detection area of the sensor, and when the object to be avoided is detected in the area located at the outside in the vehicle width direction, or in a predetermined area in the detection area of the sensor, a predetermined evading operation is performed. Therefore, it prevents the wheels from coming into contact with the furniture, the wall, and the like, which reduces or eliminates the possibility that the wheels are fallen from the platform, stairs, and the like.

An electric mobility vehicle in a third embodiment of the present invention includes the mobility body, a pair of control arms or a pair of arm rests provided at the both sides in the vehicle width direction of the mobility body, and a stereo camera provided at an upper end side and also the front end side of at least one of the pair of control arms, or a front end portion of one of the pair of arm rests, the control arms or the arm rests are used by a driver to place hands or arms, and at the upper surface of one of the control arms or the upper surface of one of the arm rests, a protrusion protruding from the upper surface toward an upper side is provided, and the protrusion is arranged at a position at the vehicle front side with respect to hand of the driver placed on one of the control arms or one of the arm rests in the upper surface of one of the control arms or the upper surface of one of the arm rests.

With this configuration, the protrusion prevents the hand of the driver, which is placed on the control arm or the arm rest, from moving toward the vehicle front side, and the possibility that the hand of the driver is positioned within a field of vision of a stereo camera which is provided at the upper end side and also the front end portion of the control arm, or the front end portion of the arm rest is reduced or eliminated. It is not preferable that a lens unit and the like of the stereo camera gets dirty by the hand of the driver, however, this possibility is also reduced or eliminated due to the protrusion.

An electric mobility vehicle of a fourth aspect of the present invention includes the mobility body, the pair of control arms or the pair of arm rests provided at the both side in the vehicle width direction of the mobility body, the sensor provided on the mobility body, a control unit, and a pair of light emission portions respectively provided on the upper end sides of the pair of control arms or the upper end sides of the pair of arm rests, and the control arms or the arm rests are used by the driver to place the hands, the control unit changes a light emission state of the pair of light emission portions in response to detection results of the sensor or the control state of the electric mobility vehicle by the control unit.

For example, when the light emission state of the pair of light emission portions is changed in response to the detected results of the sensor, a person around the electric mobility vehicle can recognize that he or she may interrupt the movement of the electric mobility vehicle.

An electric mobility vehicle according to a fifth aspect of the present invention includes the mobility body, the pair of control arms or the pair of arm rests provided at the both sides in the vehicle width direction of the mobility body, a stereo camera provided on the upper end side and also the front end portion of at least one of the pair of control arms or the front end portion of one of the pair of arm rests, a luggage basket arranged at the rear side of a seat unit of the mobility body, and a LiDAR attached to the lower surface of the luggage basket, and the control arms or the arm rests are used by the driver to place the hands or the arms.

By adopting the above described configuration, a position where the LiDAR is placed is distant from the electric mobility vehicle, which allows detection area of the LiDAR to be wider.

### {Brief Description of Drawings}

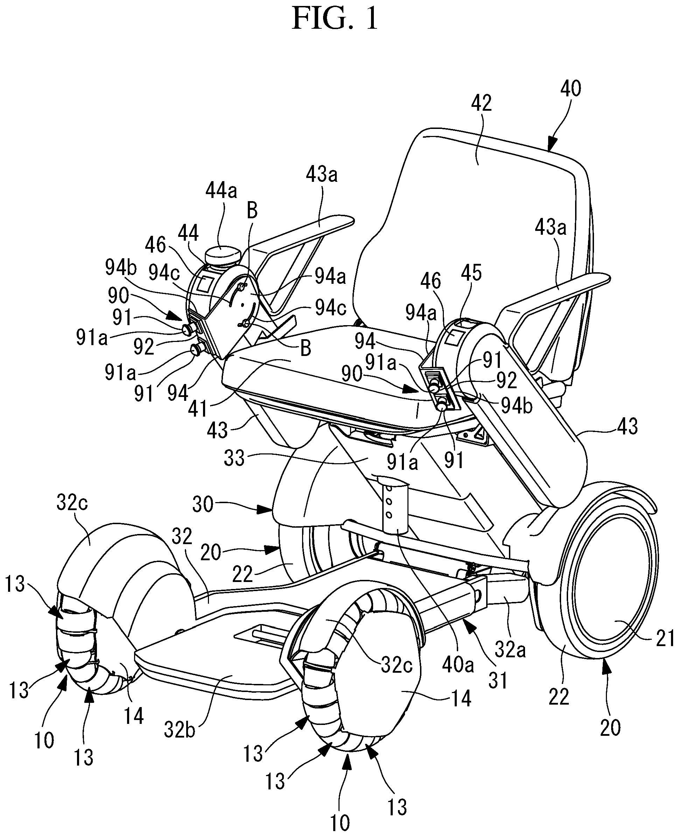

{Fig. 1}
   Fig. 1 is a front perspective view of an electric mobility vehicle according to a first embodiment of the present invention.
{Fig. 2}
   Fig. 2 is a rear perspective view of the electric mobility vehicle according to the first embodiment.
{Fig. 3}
   Fig. 3 is a plan view of the electric mobility vehicle according to the first embodiment.
{Fig. 4}
   Fig. 4 is a bottom plan view of the electric mobility vehicle according to the first embodiment in a state where a part of components is removed from the electric mobility vehicle.
{Fig. 5}
   Fig. 5 is a view which is seen from an inside in a width direction of a front wheel of the electric mobility vehicle according to the first embodiment.
{Fig. 6}
   Fig. 6 is a plan view of the front wheel, a suspension, and the like of the electric mobility vehicle according to the first embodiment.
{Fig. 7}
   Fig. 7 is a block diagram of a control unit of the electric mobility vehicle according to the first embodiment.
{Fig. 8}
   Fig. 8 is a side view of the electric mobility vehicle according to the first embodiment.
{Fig. 9}
   Fig. 9 is a plan view of a main part of the electric mobility vehicle according to the first embodiment.
{Fig.10}
   Fig. 10 is a front view of a main part of the electric mobility vehicle according to the first embodiment.
{Fig. 11}
   Fig. 11 is a side view showing an electric mobility vehicle according to a first modified example of the first embodiment.
{Fig. 12}
   Fig. 12 is a bottom plan view of an electric mobility vehicle according to a second modified example of the first embodiment in a state where a part of components is removed.
{Fig. 13}
   Fig. 13 is a diagram explaining operation of the electric mobility vehicle according to the second modified example of the first embodiment.
{Fig. 14}
   Fig. 14 is a plan view of a main part of an electric mobility vehicle according to a third modified example of the first embodiment.
{Fig. 15}
   Fig. 15 is a perspective view of a main part of an electric mobility vehicle according to a second embodiment.
{Fig. 16}
   Fig. 16 is a front view of a main part of the electric mobility vehicle of the second embodiment.
{Fig. 17}
   Fig. 17 is a side view showing a first modified example of the electric mobility vehicle of the second embodiment.
{Fig. 18}
   Fig. 18 is a perspective view of a main part of an electric mobility vehicle according to a second modified example of the second embodiment.
{Fig. 19}
   Fig. 19 is a front view of a main part of an electric mobility vehicle according to a third modified example of the second embodiment.
{Fig. 20}
   Fig. 20 is a perspective view of a main part of a part of a control arm of the electric mobility vehicle showing a forth modified example of the second embodiment.
{Fig. 21}
   Fig. 21 is a perspective view of an electric mobility vehicle according to a fifth modified example of the second embodiment.
{Fig. 22}
   Fig. 22 is a plan view of an electric mobility vehicle according to the fifth modified example of the second embodiment.

### {Description of Embodiments}

An electric mobility vehicle according to a first embodiment of the present invention will be described below with reference to the accompanying drawings.

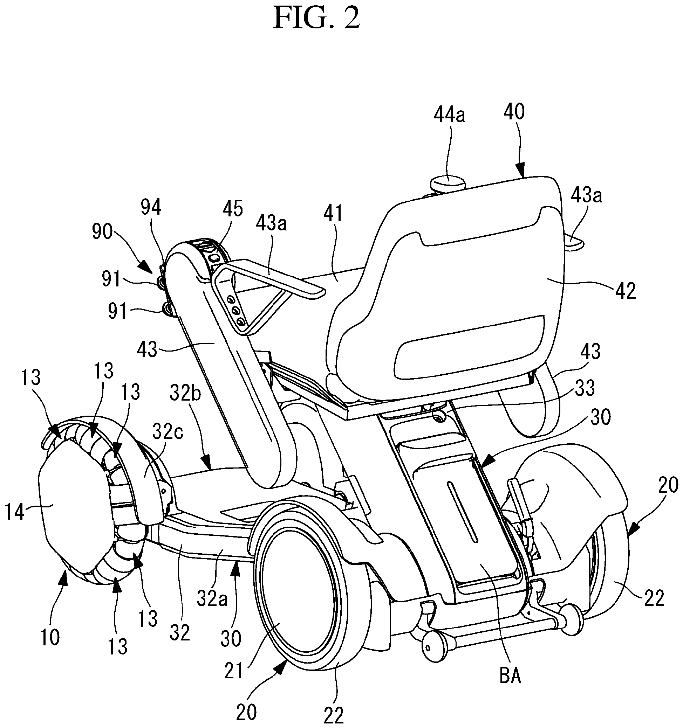

As shown in Figs. 1 to 4, this electric mobility vehicle includes a pair of front wheels 10, a pair of rear wheels 20, and a mobility body 30 which is supported by the front wheels (wheels) 10 and the rear wheels (wheels) 20. For example, the mobility body 30 has a body 31 which is supported by the front wheels 10 and the rear wheels 20, a seat unit 40 which is attached to the body 31, and motors 50 which are attached to the mobility body 30, and which drive at least one of the pair of front wheels 10 or the pair of rear wheels 20. In this embodiment, the motors 50 are attached to the body 31, and the seat unit 40 is removable from the body 31.

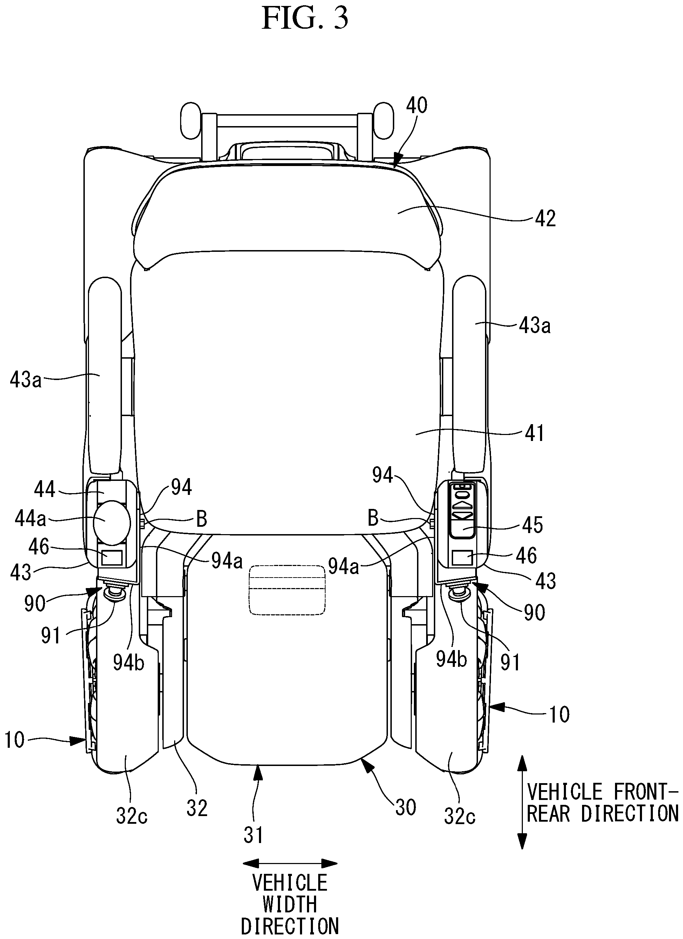

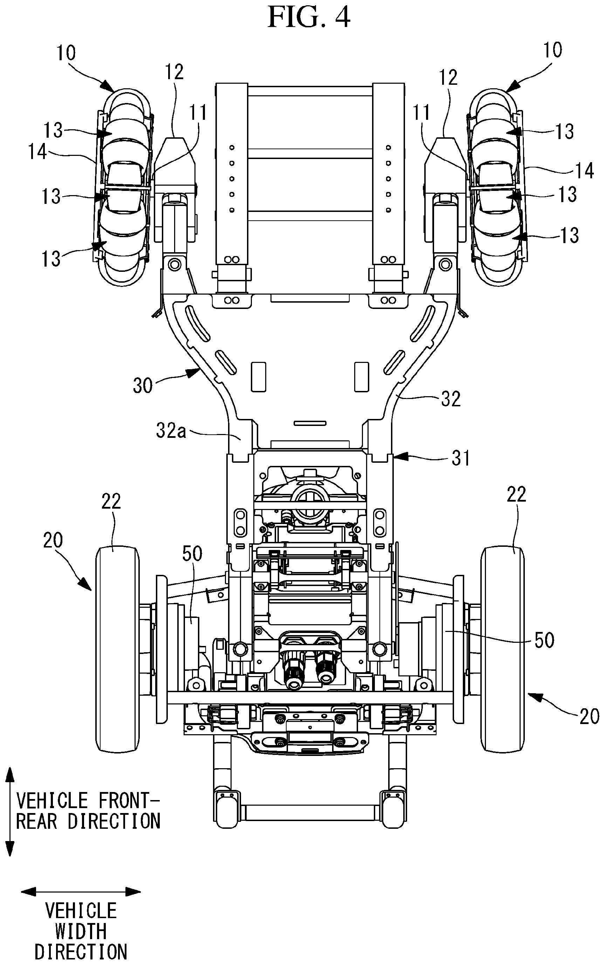

A vehicle front-rear direction shown in Figs. 3 and 4 may be referred to as a front-rear direction in the following description, and a vehicle width direction shown in Figs. 3 and 4 may be referred to as a width direction or left-right direction in the following description. Note that, the vehicle front-rear direction and the front-rear direction of the mobility body 30 are identical with each other, and the vehicle width direction and the width direction of the mobility body 30 are identical with each other. In this embodiment, the radial centers of the pair of front wheels 10 are arranged in the vehicle width direction, and the radial centers of the pair of rear wheels 20 are also arranged in the vehicle width direction, and also the vehicle front-rear direction is orthogonal to the vehicle width direction.

In this embodiment, the pair of rear wheels 20 are respectively connected to the motors 50, and each of the motors 50 drives corresponding rear wheels 20. Driving force of the motors 50 is transmitted to the corresponding front wheels 10 via a driving force transmitting means. The driving force transmitting means is a belt, gear, or the like.

As shown in Figs. 4 to 6, the front wheels 10 are supported by the body 31 by means of axles 11 and suspensions 12. Also, a contact surface of the front wheels 10 is formed by a plurality of rollers 13 which are arranged in a circumferential direction of the front wheels 10.

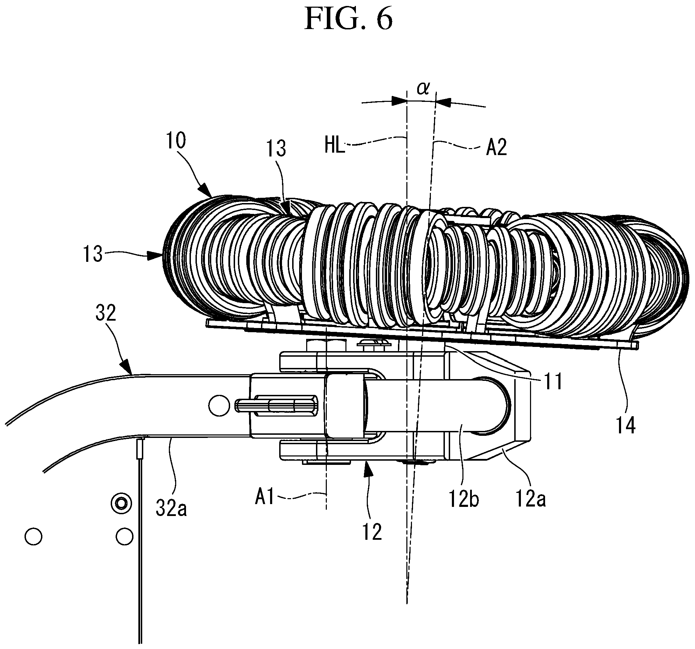

Each of the suspensions 12 has a support member 12a and a springy member 12b which is a coil spring or the like. One end side of the support member 12a is supported by a front end side of the body 31, and the support member 12a can swing around a first axis line A1 extending in the vehicle width direction. The springy member 12b biases the other end side of the support member 12a toward the vehicle front direction. The axles 11 of the front wheels 10 are fixed to the support members 12a. Also, as shown in Fig. 6, a second axis line A2, which is a central axis line of the axle 11, is inclined toward the front direction with respect to a horizontal line HL, which is perpendicular to the front-rear direction. In a plan view, it is preferable that an angle α which is between the second axis line A2 and the horizontal line HL is 2 degrees to 15 degrees, however, the angle α may be any other angle depending on conditions.

That is to say, the pair of front wheels 10 are in a toe-in state. In comparison with a case where the pair of front wheels 10 are arranged so as to be parallel to each other, with the pair of front wheels 10 in the toe-in state, it is possible to increase components of force toward the vehicle rear side exerted on the axles 11 when the electric mobility vehicle is moving. In addition, in this embodiment, the other end of the support member 12a is movable toward the vehicle rear side with respect to the body 31 against the biasing force of the springy members 12b. Therefore, it is possible to effectively reduce vibration which is generated by collision of the rollers 13 with the contact surface. Note that, the front wheels 10 may not arranged in the toe-in state.

Each of the front wheels 10 includes a hub 14 which is attached to the axles 11, and a plurality of roller supporting shafts (not shown) which are supported by the hub 14, and the plurality of rollers 13 are supported respectively by the roller supporting shafts in a rotatable manner. Note that, the hub 14 may be attached to the axles 11 by means of a bearing or the like, and the hub 14 may be attached to the axles 11 by means of a cushioning member, an intermediate member, or the like. Axis lines of the roller supporting shafts extend in directions orthogonal to the radial direction of the axle 11.

The rollers 13 rotate around the axis line of the corresponding roller support shafts. That is to say, the front wheels 10 are omnidirectional wheels which move in every direction with respect to a travel surface.

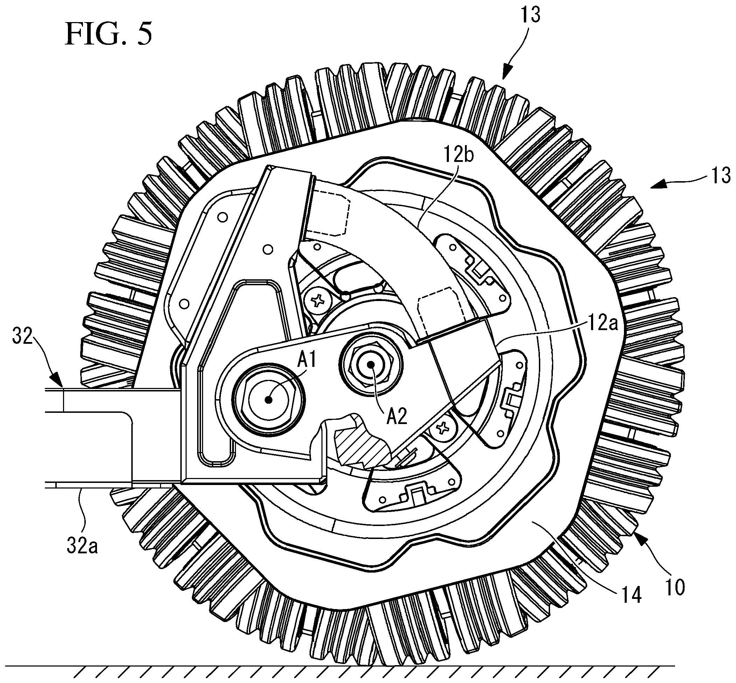

An outer circumferential surface of the roller 13 is formed by using a material having rubber-like elasticity, and a plurality of grooves extending in the circumferential direction thereof are provided on the outer circumferential surface of the roller 13 (refer to Figs. 5 and 6).

In this embodiment, the rear wheels 20 include an axle which is not shown, a hub 21 attached to the axle, and an outer circumferential member 22 which is provided on the outer circumferential side of the hub 21, and the outer circumferential surface thereof is formed by using a material having rubber-like elasticity, however, the omnidirectional wheels may be used as the rear wheels 20, which are the same as the front wheels 10. The axle of the rear wheels 20 may be the same with a main shaft of the motor 50.

Structure of the body 31 is changeable as required. In this embodiment, the body 31 includes a base portion 32 which extends along the ground, and a seat support portion 33 which extends toward an upper side from a rear end side of the base portion 32. The seat support portion 33 is inclined toward the vehicle front side, and a seat unit 40 is attached to the upper end side of the seat support portion 33.

The base portion 32 of this embodiment includes a metallic base frame 32a which supports the suspensions 12 of the front wheels 10 and the motors 50 of the rear wheels 20, and a plastic cover portion 32b which at least partially covers the base frame 32a. The cover portion 32b is used as a portion for putting feet of a driver seated on the seat unit 40, a portion for placing a luggage, or the like. The cover portion 32b also includes a pair of fenders 32c each of which covers the corresponding front wheels 10 from the upper side. In one example, the fenders 32c only have a function which covers the front wheels 10. In another example, the fenders 32c also have a function which strengthens rigidity of the body 31. Also, there may be a case where each of the fenders 32c cover only a part of the front wheels 10.

In this embodiment, the seat unit 40 has a shaft 40a at the lower portion thereof, and the shaft 40a is attached to the upper end side of the seat support portion 33. A rechargeable battery BA is provided at the back surface of the seat support portion 33, and a control unit 60, which will be described below, is placed within the seat support portion 33.

The seat unit 40 has a seat surface portion 41 on which a driver is seated, a backrest portion 42, a right control arm 43, and a left control arm 43.

An armrest 43a is fixed to the upper surface of each of the control arms 43. For example, the driver puts the arms on the armrests 43a of the pair of the control arms 43, respectively. Also, the driver puts the arms on the upper ends of the pair of control arms 43, respectively. In this embodiment, both of the control arms 43 and the armrests 43a are provided, however, the control arms 43 or the armrests 43a may only be provided. In this case, the driver puts at least one of the arms and the hands on the control arms 43, or puts at least one of the arms and the hands on the armrests 43a.

An operation portion 44 having an operation lever 44a is provided at the upper end of the right control arm 43. In such a state where no force is applied, the operation lever 44a is positioned at a neutral position by a springy member (not shown) which is located within the operation portion 44. The driver can displace the operation lever 44a toward the right direction, the left direction, the front direction, and the rear direction with respect to the neutral position.

A signal, which is in response to displacement direction and displacement amount of the operation lever 44a, is sent from the operation portion 44 to the control unit 60, which will be described below, and the control unit 60 controls the motors 50 in response to the received signal. For example, when the operation lever 44a is displaced toward the front direction with respect to the neutral position, a signal which makes the motors 50 rotate toward the vehicle front side is sent. By this, the electric mobility vehicle moves forward at speed which is in response to the displacement amount of the operation lever 44a. Also, when the operation lever 44a is displaced toward the left diagonal forward direction with respect to the neutral position, a signal which makes the left motor 50 rotate toward the vehicle front side at speed which is slower than the right motor 50. By this, the electric mobility vehicle moves forward while turning left at speed which is in response to the displacement amount of the lever 44a.

A setting portion 45 which is for performing all sorts of settings related to the electric mobility vehicle is provided at the upper end of the left control arm 43. Examples of the various sorts of settings are settings of maximum speed, settings regarding a driving mode, and settings for locking the electric mobility vehicle. A plurality of operation buttons, a display, and the like are provided at the setting portion 45. Examples of the driving mode are an energy saving driving mode in which power consumption is suppressed, a sports driving mode in which running performance is enhanced and in which the electric consumption is not suppressed, a normal driving mode which is a mode between the energy saving driving mode and the sports driving mode, and the like. Examples of the settings for locking the electric mobility vehicle are a setting of passcode for locking, a setting of timing for unlocking, and the like. The setting signal of the setting portion 45 is sent to the control unit 60, which will be described below, and the settings of the electric mobility vehicle is set or changed in the control unit 60.

A notification device 46 is provided in each of the left and the right control arms 43. The notification device 46 is a voice generator, a display, a vibration generation device, or the like. The vibration generation device vibrates a part of the upper end side of the control arm 43, the operation portion 44, the setting portion 45, and the like, at several tens of Hz for example.

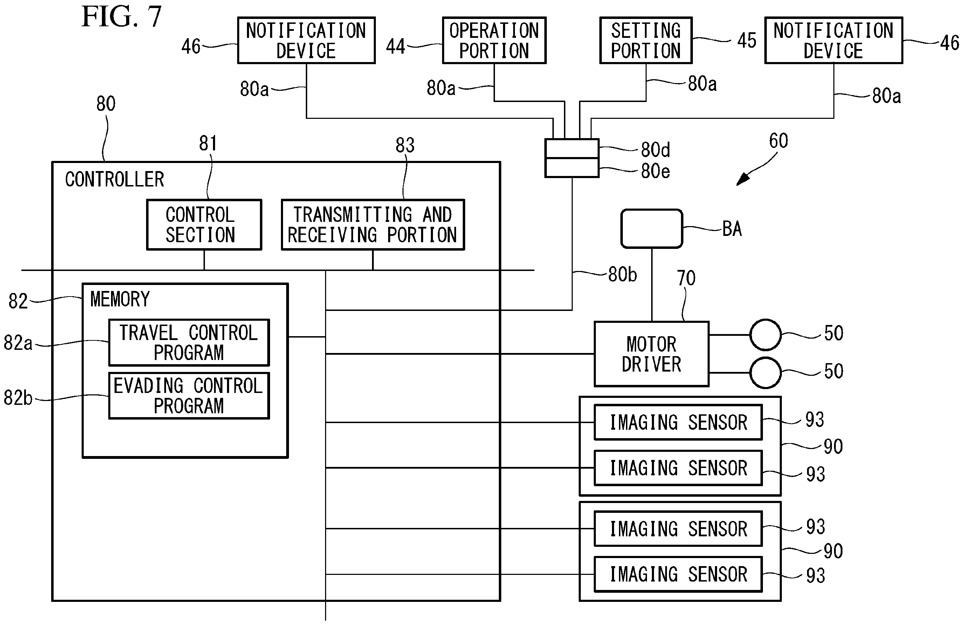

As shown in Fig. 7, the control unit 60 has a motor driver 70 which drives the motors 50, and a controller 80.

The motor driver 70 is connected to the battery BA. Also, the motor driver 70 is connected to each of the motors 50 as well, and the motor driver 70 supplies drive power to the motors 50.

As shown in Fig. 7, the controller 80 includes a control section 81 having a CPU, a RAM, and the like, a storage unit 82 having a non-volatile storage, a ROM, and the like, and a transmitting and receiving portion 83. A travel control program 82a which controls the electric mobility vehicle is stored in the storage unit 82. The control section 81 operates on the basis of the travel control program 82a. The control section 81 sends drive signals for driving the motors 50 to the motor driver 70 on the basis of the signals from the operation portion 44 and the setting portion 45.

As shown in Fig. 7, the signal from the operation portion 44 and that from the setting portion 45 are sent to the controller 80 via signal lines 80a and signal lines 80b. Also, a control signal from the controller 80 is sent to the notification devices 46 via the signal lines 80a and the signal lines 80b. The signal lines 80a are provided in the seat unit 40, and the signal lines 80b are provided in the body 31. Connectors 80d, 80e are provided between the signal lines 80a and the signal line 80b. At the time when the seat unit 40 is removed from the body 31, the connector 80d is separated from the connector 80e. At the time when the seat unit 40 is attached to the body 31, the connector 80d is connected to the connector 80e.

Each of two stereo cameras (sensors) 90, which is a visual sensor, is attached to the upper end side of the right control arm 43 and the upper end side of the left control arm 43. Each of the stereo cameras 90 includes a pair lens units 91, and a camera main body 92 which supports the pair of the lens units 91. A pair of imaging sensors 93 (Fig. 7) is provided inside the camera main body 92, and the pair of the imaging sensors 93 correspond to the pair of lens units 91, respectively. The imaging sensors 93 are known sensors, such as a CMOS sensor, or the like. The imaging sensors 93 are connected to the controller 80.

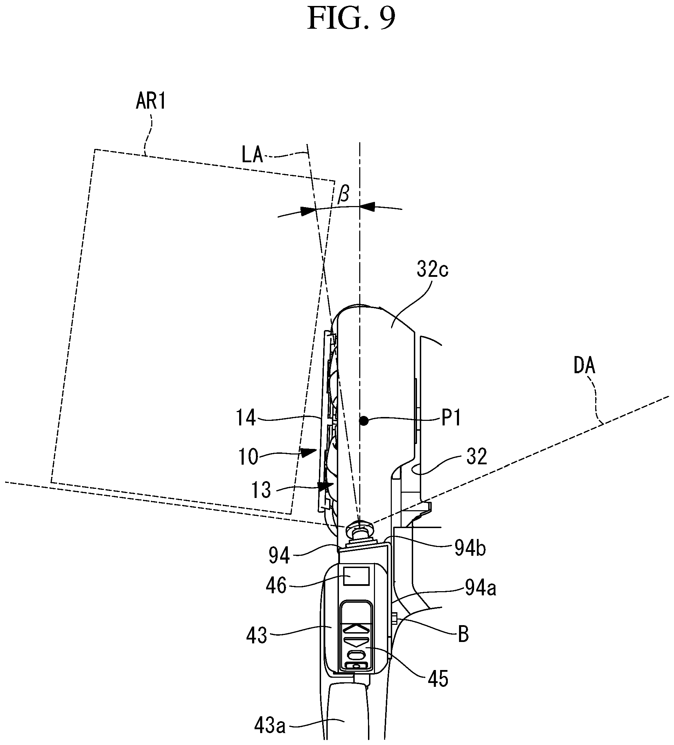

As shown in Fig. 9, at least a part of the left front wheel 10, or a part of the fender 32c of the left front wheel 10 is within a detection area DA of the stereo camera 90 provided at the left control arm 43. Also, an area at the outside in the width direction with respect to the left front wheel is within this detection area DA.

Similarly, at least a part of the right front wheel 10, or a part of the fender 32c of the right front wheel 10 is within the detection area DA of the stereo camera 90 provided at the right control arm 43. Also, an area at the outside in the width direction with respect to the right front wheel 10 is within this detection area DA.

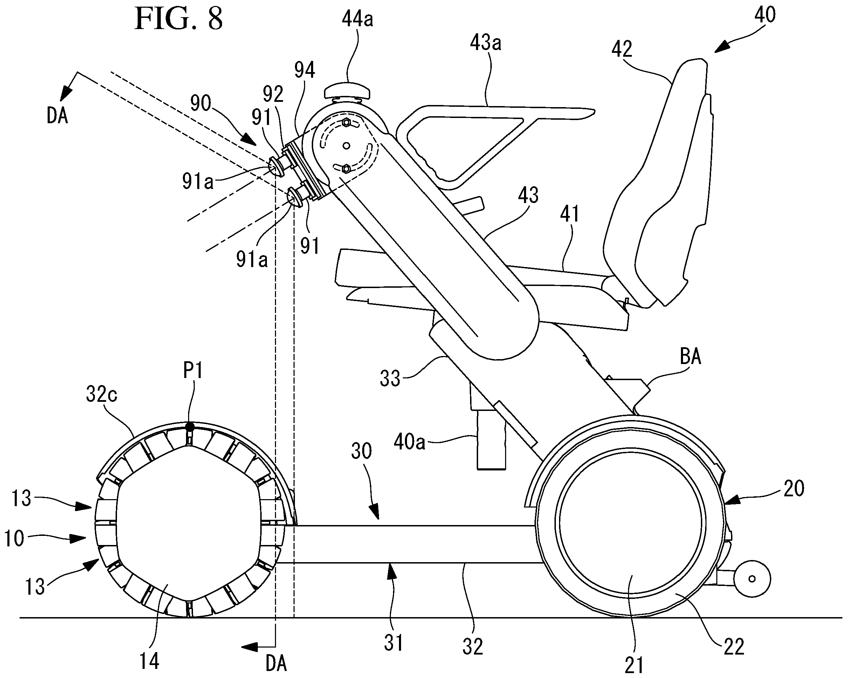

Here, as shown in Fig. 8, for example, the detection area DA of the stereo camera 90 is an area where the image caption areas of the imaging sensors 93 are overlapped.

Also, as shown in Fig. 9, a light axis LA of each the lens units 91 of the stereo camera 90 extends diagonally toward the outside in the width direction. More specifically, in a plan view shown in Fig. 9, the light axis LA of each of the lens units 91 extends in a direction forming an angle β with respect to the front-rear direction. In one example, the angle β is 5 degrees to 30 degrees.

Fig. 9 shows a part of the detection area DA, and the detection area DA also includes an area which is located in front of the area shown in Fig. 9. As shown in Fig. 9, in this embodiment, the part of the left front wheel 10, and the part of the fender 32c of the left front wheel 10, and the travel surface at the outside in the width direction with respect to the left front wheel 10 are within the detection area DA of the left stereo camera 9. In such a case where there is an object to be avoided, such as an obstacle, a wall, a gutter, or the like is on the travel surface, the object to be avoided enters the detection area DA of the stereo cameras 90. The detection area DA of the right stereo camera 90 is the same as or the similar to the detection area DA of the left stereo camera 90.

Each of the stereo cameras 90 obtains two images having a parallax by means of the pair of imaging sensors 93. The two images having the parallax may be referred to as parallax images in the following description. The control section 81 of the controller 80 operates on the basis of an evading control program 82b which is stored in the storage unit 82. That is to say, the control section 81 creates distance images by processing the parallax images. And, the control section 81 detects the object to be avoided with which the front wheels 10 or the fenders 32c may come into contact. The object to be avoided is an obstacle, a person, an animal, a plant, and the like, for example. And, the obstacle is a wall, a large rock, a bump, and the like, for example. In another example, the control section 81 detects the object to be avoided, such as a bump, a hole a gutter, or the like, in which the front wheels 10 may be fallen or get caught, in the distance images.

Moreover, the control section 81 controls the motors 50 by control signals for evading operation, when the object to be avoided with which the wheels 10 or the fenders 32c may come into contact is detected in a predetermined area AR1 in the detection area DA, for example. In another example, the control section 81 operates the notification devices 46 in such a case where the object to be avoided with which the wheels 10 or the fenders 32c may come into contact in the predetermined area AR1 in the detection area DA, for example. Also, the control section 81 controls the motors by control signals for evading operation when the control section 81 detects the object to be avoided in which the front wheels 10 may be fallen or get caught in the predetermined area AR1 in the detection area DA, for example. In another example, the control section 81 operates the notification devices 46 when the control section 81 detects the object to be avoided in which the front wheels 10 may be fallen or get caught in the predetermined area AR1 in the detection area DA, for example. Examples of the evading operation include reduction of the rotation speed of the motors 50, stopping the rotation of the motors 50, controlling the motors 50 for restricting the movement of the electric mobility vehicle toward the side of the object to be avoided, and the like. In another example, as the evading operation, the control section 81 vibrates the upper end portion of the left and right control arms 43 by means of the notification devices 46. Furthermore, in another example, as the evading operation, the control section 81 generates an alert by means of the notification devices 46.

For example, with respect to either one of the left or the right, when the control section 81 detects that the front wheel 10 or the fender 32c may come into contact with the object to be avoided, or may be fallen or get caught in the obstacle in the predetermined area AR1 in the detection area DA, the control section 81 vibrates the upper end of the said one of the control arms 43 by means of the notification device 46. By this, the driver can intuitively recognize the direction where front wheel 10 or the fender 32c may come into contact with the object to be avoided, the wheel may be fallen or get caught in the obstacle.

Also, the evading operation may be performed when the object to be avoided is detected in the detection area DA of the stereo cameras 90.

As described above, by using the configuration of this embodiment, the travel surface located at the outside in the width direction of each of the front wheels 10 is positioned within the detection area DA of the stereo camera 90. Also, at least the part of the front wheel 10 or the part of the fender 32c of the front wheel 10 is positioned within the detection area DA of the stereo camera 90. This configuration is extremely advantageous for certainly grasping a relationship between the object to be avoided, which exists at the outside in the width direction of the front wheel 10, and the front wheel 10.

Also, when the driver checks the vicinities of the front wheels 10 on the travel surface located at the outside in the width direction of the front wheels 10 by eyesight, the driver has to change the posture. In this embodiment, the vicinities of the front wheels 10 on the travel surface located at the outside in the width direction of the front wheels 10 is positioned within the detection area DA of the stereo cameras 90, which is capable of reducing the burden of the monitoring by the driver.

Especially, when the driver drives the electric mobility vehicle in the house or the office, the driver needs to be careful not to come into contact with an object to be avoided, such as furniture, a wall, and the like. Also, the driver needs to be careful not to enter the object to be avoided, such as stairs and the like. There are various kinds of objects to be avoided in the house or the office. For that reason, it is difficult for the driver to certainly grasp all of these objects to be avoided by visual observation. Therefore, the configuration of this embodiment is extremely useful in the house and the office.

Also, the left stereo camera 90 may be attached, for example, to the seat unit 40, the body 31, a pole extending from the seat unit 40 or the body 31, the left control arm 43, the armrest 43a thereof, or the like, so that at least one of the part of the left rear wheel 20 and the part of the fender of the left rear wheel 20 is positioned within the detection area DA of the left stereo camera 90.

Also, the right stereo camera 90 may be attached, for example, to the seat unit 40, the body 31, the pole extending from the seat unit 40 or the body 31, the right control arm 43, the arm rest 43a thereof, or the like, so that at least one of the part of the right rear wheel 20 and the part of the fender of the right rear wheel 20 is positioned within the detection area DA of the right stereo camera 90.

In the above described embodiment, a position P1 which is located above the rotation center of the front wheel 10 or the rear wheel 20 is positioned within the detection area DA of the stereo camera 90, as shown in Fig. 9. That is to say, the upper surface of the fender corresponding to the position P1 which is located above the rotation center of the front wheel 10 or the rear wheel 20 is positioned within the detection area DA. With the images obtained by this kind of stereo cameras 90, it is possible to certainly grasp the relationship between the object to be avoided, which exists at the outside in the width direction of the front wheel 10 and the front wheel 10.

Moreover, both of the front end side and the rear end side of the front wheels 10 or the rear wheels 20 may be positioned within the detection area DA of the stereo cameras 90. Alternatively, both of the front end side and the rear end side of the fenders of the front wheels 10 or the rear wheels 20 may be positioned within the detection area DA of the stereo cameras 90. With the images obtained by the stereo cameras 90 which are positioned as described above, it is possible to more certainly grasp the relationship between the front wheel 10 or the rear wheel 20 and the object to be avoided which exists at the outside in the width direction thereof.

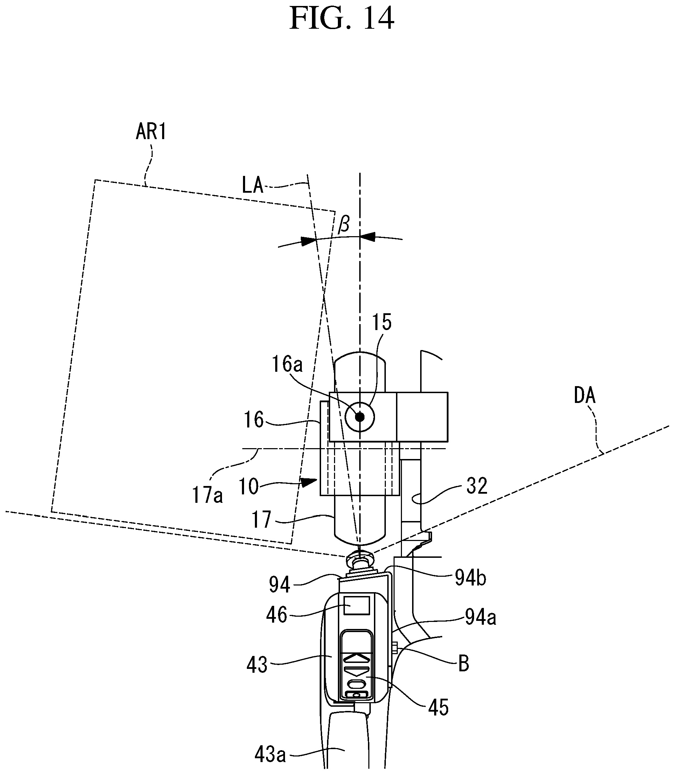

As shown in Fig. 14, the front wheels 10 may be a caster-type wheel. In this case, as shown in Fig. 14, a vertical shaft 15 of the caster is supported by the body 31, and a housing 16 of the caster is supported in a rotatable manner around a vertical axis line 16a with respect to the vertical shaft 15. Also, a wheel 17 of the caster is supported by the housing 16 in a rotatable manner around an axis line 17a extending in a width direction. The wheel 17 is a normal wheel and not the omnidirectional wheel, the axis line 17a is arranged at a position deviated in the front-rear direction with respect to the vertical axis line 16a.

In this case also, when a part of the front wheel 10 is positioned within the detection area DA of the camera 90, the same or similar effect as described above can be achieved. Also, when the electric mobility vehicle moves forward, the part of the front wheel 10 is positioned within the detection area DA, and when the electric mobility vehicle moves forward while turning, for example, it may happen that the front wheel 10 does not exist in the detection area DA. In this case also, it is considered that the part of the front wheel 10 is positioned within the detection area DA. In such a case where the fender is provided at the upper side of the front wheel, the same or the similar effect as described above can be achieved as long as at least a part of the fender exists in the detection area DA.

Also, the rear wheels 20 may be the above described caster-type wheel.

Also, although the part of the front wheels 10, the part of the rear wheels 20, or the part of the fenders thereof is positioned within the detection area DA in the above described embodiment, there may be a case where the areas at the outside in the width direction of the front wheels 10 or the rear wheels 20 are not positioned within the detection area DA of the stereo cameras 90. In this case also, the same or the similar effect as described above can be achieved by the stereo cameras 90.

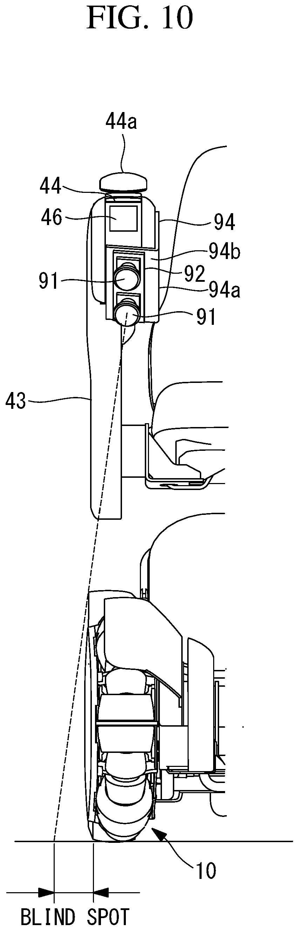

Also, as shown in Fig. 8, the pair of lens units 91 of the stereo camera 90 are arranged in the vertical direction with each other. As described above, the detection area DA of the stereo camera 90 is the area where image caption areas of the imaging sensors 93 are overlapped. Therefore, the configuration of this embodiment, in which the pair of lens units 91 are arranged in the vertical direction with each other, is advantageous for reducing or eliminating a blind spot at the outside in the width direction of the front wheels 10, as shown in Fig. 10.

When the driver changes the direction of the electric mobility vehicle or the like, in many cases, there is not much space around the electric mobility vehicle. Further, when the driver is seated on the electric mobility vehicle and works in the desk, the front end side of the electric mobility vehicle enters under the desk. In this case, it is extremely difficult for the driver to see the vicinity of the front wheels 10 on the travel surface at the outside in the width direction of the front wheels 10. Under these circumstances, the above described configuration is extremely useful for reducing the blind spot at the outside in the width direction of the front wheels 10.

Furthermore, the pair of lens units 91 may be arranged in the front-rear direction with each other, and the pair of lens units 91 may be arranged in the vertical direction and the front-rear direction with each other. These configurations are also useful for reducing or eliminating the blind spot at the outside in the width direction of the front wheels 10.

Also, in this embodiment, a part of the right front wheel 10 or the right rear wheel 20 and a part of the fender thereof are positioned within the detection area DA of one of the stereo cameras 90, and a part of the left front wheel 10 or the left rear wheel 20 and a part of the fender thereof are in the detection area DA of the other one of the stereo cameras 90. As described above, whether or not there is the object to be avoided at the outside in the width direction of the both the left and the right front wheels 10 or the rear wheels 20 is monitored. It is difficult for the driver to certainly grasp all of the objects to be avoided at both of the left and right sides by visual observation, therefore, the above described configuration is extremely useful in the house and the office.

Also, in this embodiment, a position in the width direction of the lens units 91 of each of the stereo cameras 90 overlaps a position in the width direction of the corresponding front wheel 10. Also, in this embodiment, the position in the width direction of the lens units 91 is an area in the width direction where the lens units 91 exist, and the position in the width direction of the front wheel 10 is an area in the width direction where the front wheel 10 exists. This configuration is advantageous for reducing the blind spot at the outside in the width direction of the front wheels 10 as shown in Fig. 10.

Moreover, in another example, the lens units 91 of each of the stereo cameras 90 are positioned above the travel surface at the outside in the width direction of the corresponding front wheel 10. This configuration allows further reduction of the blind spot at the outside in the width direction of the front wheels 10, or eliminate the blind spot.

Furthermore, in this embodiment, each of the stereo cameras 90 is attached to the corresponding control arm 43. The control arms 43 are the portion where the driver puts his/her hands or arms. It is often the case that each of the control arms 43 is positioned at outside in the width direction with respect to the torso of the driver who is seated on the seat unit 40. Also, it is often the case that each of the control arms 43 is positioned at the outside in the width direction with respect to the thighs of the driver who is seated on the seat unit 40. Accordingly, the above described configuration reduces the possibility that the detection area DA is hindered by the body of the driver.

Also, instead of providing the pair of control arms 43, it is possible to provide the pair of arm rests 43a in the seat unit 40. For example, it is possible to attach the stereo cameras 90 to the front end portions of the arm rests 43a. This configuration also provides the same or the similar effects as those described in this embodiment.

Furthermore, the driver can visually confirm the positions of his/her hands and the positions of his/her arms easily. Also, even in a case where the driver is not looking at the positions of his/her own hands and the positions of his/her own arms, it is possible to instinctively recognize the approximate positions of his/her own hands and the approximate positions of his/her own arms. Therefore, the configuration of this embodiment, in which the stereo cameras 90 are provided on the control arms 43 and the arm rests 43a, is advantageous for preventing the stereo cameras 90 from having a collision with a wall and the like. That is to say, the configuration of this embodiment is advantageous for preventing the stereo cameras 90 from being damaged, or displaced, and the like.

Also, the light axis LA of each of the lens units 91 of the stereo camera 90 extends diagonally toward the outside in the width direction. Therefore, a wider area at the outside in the width direction of the front wheels 10 is positioned within the detection area DA of the stereo cameras 90. This configuration is extremely advantageous for certainly grasping the relationship between the object to be avoided, which exists at the outside in the width direction of the front wheels 10 and the front wheels 10.

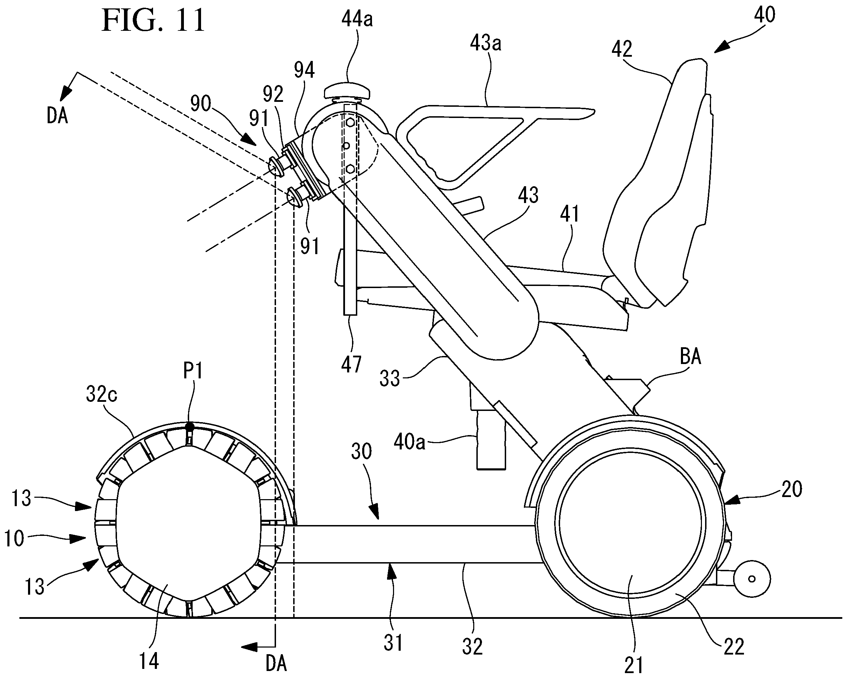

In another example, as shown in Fig. 11, a pair of poles 47 extending from the vicinity of the seat surface portion 41 of the seat unit 40 toward the upper side is provided, and the stereo cameras 90 are attached to the poles 47, respectively.

In such a case where the stereo camera 90 is attached to each of the poles as described above, it is easy to adjust the position in the vertical direction of the stereo cameras 90. Therefore, the position of the stereo cameras 90 is suitably adjusted in response to place of use, use status, figure of the driver, and the like. Accordingly, this configuration is advantageous for accurately monitoring whether or not there is the object to be avoided at the outside in the width direction of the front wheels 10.

Also, it is possible to fix the pair of poles 47 to the rear end side of the seat unit 40. In this case, the upper end of the pair of poles 47 is arranged at the back side of the driver who is seated on the seat unit 40. Moreover, in such a case where each of the stereo cameras 90 is attached at the upper end side of each of the poles 47, the stereo cameras 90 are arranged at a position behind and above the torso of the driver.

Furthermore, instead of the stereo camera 90, a three-dimensional area sensor, a three dimensional distance sensor, and the like can be used. The three-dimensional area sensor has a known structure in which each of a plurality of image sensors arranged on a plane surface obtains distance information. A known TOF system or the like can be used in order to obtain the distance information of each pixel. Photo detectors, such as a plurality of CMOS sensors arranged on a surface, or the like, receive light from a near infrared radiation or infrared LED, and therefore, it is possible to use the three-dimensional distance sensor which obtains a group of three-dimensional points. In this case also, as long as at least the part of the front wheel 10 or the rear wheel 20, or the part of the fender thereof, and the area at the outside in the width direction of the front wheel 10 or the rear wheel 20 are positioned within the detection area of the three-dimensional area sensor or the three-dimensional distance sensor, the same or similar effect as described above or described below can be achieved.

Moreover, instead of the stereo camera 90, it is possible to use a laser sensor or an ultrasound sensor. In these cases also, at least the part of the front wheel 10 or the rear wheel 20 or the part of the fender thereof, and the area at the outside in the width direction of the front wheel 10 or the rear wheel 20 are positioned within the detection area of the laser sensor or the ultrasonic sensor, the same or similar effect as described above or described below can be achieved.

Furthermore, instead of the stereo camera 90, it is possible to use a millimeter wave sensor using radio wave having a wave length which is equal to or greater than 1mm and equal to or less than 1000mm, and it is also possible to use a LiDAR (Light Detection and Ranging or Laser Imaging Detection and Ranging) which irradiates laser beam in a pulse manner so as to measure distance to an object on the basis of reflected light.

In this embodiment, the pair of front wheels 10 are in a toe-in state. That is to say, in such a state where the electric mobility vehicle moves straight toward the front side, the rear end sides of the front wheels are located at the outside in the width direction in comparison with the front end sides thereof. In this embodiment, it is possible to monitor the outside in the width direction of the front wheel 10 in detail. Therefore, in such a state where the electric mobility vehicle moves straight toward the front side, it is possible to detect the object to be avoided which the front end side of the front wheel 10 does not come into contact with, but the rear end side of the front wheel 10 does. For example, at the time when the electric mobility vehicle moves straight toward the front side at low speed in the house or the office, legs of a desk and the like is detected as the above described object to be avoided.

The stereo cameras 90 are respectively attached at the corresponding control arms 43 by means of a stay (an attachment member) 94. The stay 94 has a fixing portion 94a which is fixed to a surface at the inside in the width direction of the control arm 43 by means of the bolt B, and an extending portion 94b extending toward the outside in the width direction from an end of the fixing portion 94a. The stay 94 is formed by bending a plate-like member. In one example, an angle formed between the fixing portion 94a and the extending portion 94b is equal to the angle β. By adopting this configuration, when the light axis LA of each of the lens units 91 is oriented toward the outside in a diagonal manner, it is easy to set the angle β which is formed between the light axis LA of each of the lens units 91 and the front-rear direction.

Also, the stereo cameras 90 may be arranged within the upper end portions of the control arms 43. For example, the stereo camera 90 is arranged within a hollow portion provided on the control arm 43. In this case, a transparent cover is attached at a front surface of the upper end portion of the control arms 43, and the pair of lens units 91 are arranged at a position which is located inside with respect to the cover. In this case also, the stereo cameras 90 can be arranged in order to achieve the same or the similar effect as described above.

Also, in one example, elongate holes 94c are provided at the fixing portion 94a, and the bolt B is inserted into each of the elongate holes 94c. The elongate hole 94c has an arc shape. In this case, by loosen the bolts B, it is possible to easily adjust the detection area DA of the stereo cameras 90 in the front-rear direction. And, the fixing portion 94a and the extending portion 94b may be connected by a bolt or the like through another member so that an angle between the fixing portion 94a and the extending portion 94b may be adjustable. In this case, the direction of the light axis LA of each of the lens units 91 of the stereo camera 90 can easily be adjusted so that the light axis LA is oriented in the vehicle width direction.

Moreover, as shown in Fig. 8, in this embodiment, the front side of the electric mobility vehicle is positioned within the detection area DA of the stereo cameras. For example, the front side of the head of the driver enters detection area DA of the stereo cameras 90. By this, it is also possible to grasp the relationship between the object to be avoided existing at the front side of the head of the driver and the head of the driver.

As described above, in such a case where at least one of the part of the left rear wheel 20 and the fender of the left rear wheel 20 are positioned within the detection area DA of the left stereo camera 90, and at least one of the part of right rear wheel 20 and the part of the fender of the right rear wheel 20 are positioned within the detection area DA of the right stereo camera 90, danger which is caused by the rear wheels 20 moving (sliding) toward the outside in the width direction can be avoided.

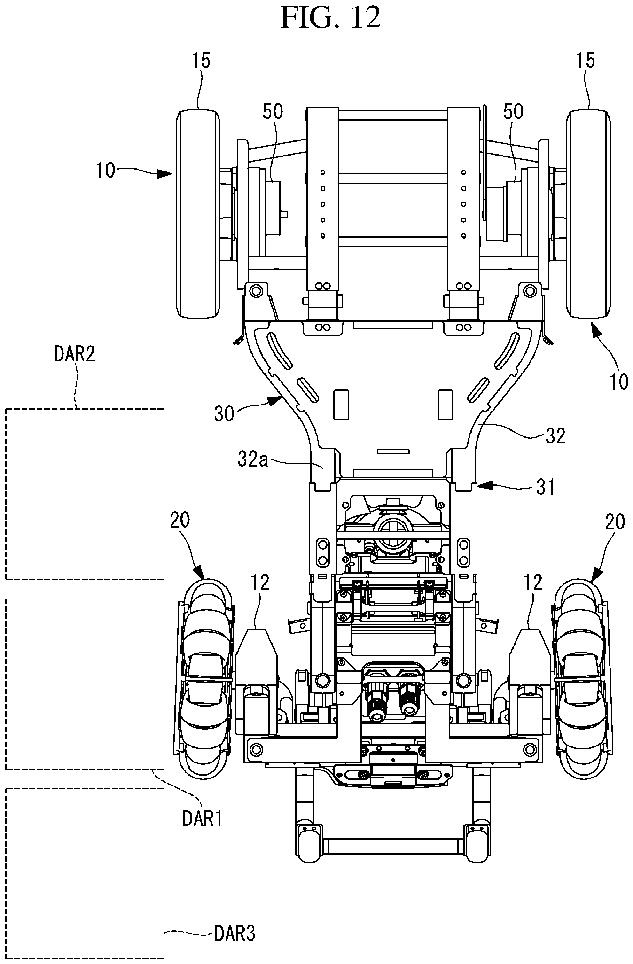

In one example, as shown in Fig. 12, the front wheels 10 have a hub and an outer circumferential member 15 having rubber-like elasticity, which is provided on an outer circumference of the hub. The rear wheels 20 shown in Fig. 12 are an omnidirectional wheel having an axle, a plurality of rollers, and a hub which are the same as or similar to the above described axle 11, the plurality of rollers 13, and the hub 14, and the rear wheels 20 are respectively supported by the rear end side of the body 31 via the suspensions 12. Also, motors 50 are respectively supported by the base frame 32a in the vicinity of the pair of front wheels 10, and the front wheels 10 may respectively be driven by the motors 50. The rear wheels 20 may be configured so as to be driven by the motors 50, and wheels other than the front wheels 10 and the rear wheels 20 may be configured so as to be driven by the motors 50.

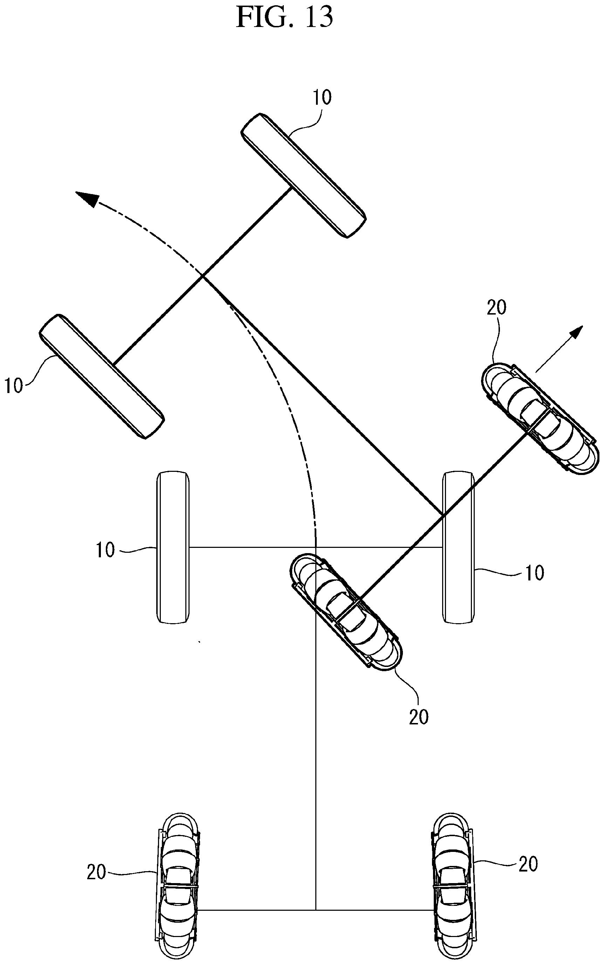

As described above, in such a case where the front wheels 10 are not the omnidirectional wheel, and the rear wheels 20 are the omnidirectional wheel, when the driver uses the operation lever 44a so as to move the electric mobility vehicle toward a diagonal right of the forward side, to move toward a diagonal left of the rear side, to turn toward the right side, to turn toward the left side, or the like, for example, as shown in Fig. 13, the rear wheels 20 side may move toward the outside in the width direction than the state expected by the driver. That is to say, the rear wheels, which are the omnidirectional wheel, have a tendency to move toward the width direction in comparison with the front wheels 10. For that reason, when the driver steers the front wheels 10 side toward an intended direction, the rear wheels 20 may be positioned at the outside in the width direction than a position recognized by the driver.

In such a case where the driver is in a building, such as a house, and office, or the like, the rear wheels 20 can come into contact with a furniture, a wall, or the like. Also, the rear wheels 20 can fall from a platform in a station, in a vicinity of stairs, and the like.

In order to avoid the above situations, the control section 81 controls the motors 50 by the control signals for an evading operation at the time when the object to be avoided, which may come into contact with the rear wheels 20 or the fenders thereof, is detected in predetermined area in the detection area DA, for example. In another example, the control section 81 operates the notification device 46 at the time when the object to be avoided, which may come into contact with the rear wheels 20 or the fenders thereof, is detected in the predetermined area in the detection area DA, for example. Also, the control section 81 controls the motors 50 by the control signals for the evading operation at the time when the object to be avoided in which the rear wheels 20 may be fallen or get caught is detected in the predetermined area in the detection area DA, for example. In another example, the control section 81 operates the notification device 46 at the time when the object to be avoided in which the rear wheels 20 may be fallen or get caught is detected in the predetermined area in the detection area DA, for example. Examples of the evading operation include reduction of the rotation speed of the motors 50, stopping the rotation of the motors 50, controlling the motors 50 for restricting the movement of the electric mobility vehicle toward the side of the object to be avoided, and the like. In another example, as the evading operation, the control section 81 vibrates the upper end portion of the left and right control arms 43 by means of the notification devices 46. Furthermore, in another example, as the evading operation, the control section 81 generates an alert by means of the notification device 46.

For example, For example, with respect to either one of the left or the right, when the control section 81 detects that the rear wheel 20 or the fender 32c thereof may come into contact with the object to be avoided, or may be fallen or get caught in the object in the predetermined area AR1 in the detection area DA, the control section 81 vibrates the upper end of the said one of the control arms 43 by means of the notification device 46. By this, the driver can instinctively recognize the direction where there is a possibility of contacting, falling, or getting caught.

Also, the evading operation may be performed at the time when the object to be avoided is detected in the detection area DA of the stereo cameras 90.

Moreover, also in the above described example explained by using Figs. 12 and 13, instead of the stereo camera 90, the three-dimensional area sensor, the three-dimensional distance sensor, the laser sensor, the ultrasonic wave sensor, or the like can be used. Also, in the above described example explained by using Figs. 12 and 13, a detection area of those sensors can be the detection areas DAR1, DAR2, DAR3, and the like.

The detection area DAR1 is an area located at the outside in the width direction of the rear wheels 20, however, the rear wheels 20 or the fenders thereof are not included in the detection area DAR1. The detection area DAR2 is an area located at the vehicle front side with respect to the area located at the outside in the width direction, and the rear wheels 20 or the fenders thereof are not included in the detection area DAR2, and the area located at the outside in the width direction of the rear wheels 20 is not included as well. The detection area DAR 3 is an area located at the vehicle rear side with respect to the area located at the outside in the width direction of the rear wheels 20, and the rear wheels 20 or the fenders thereof are not included in the detection area DAR 3, and the area located at the outside in the width direction of the rear wheels 20 is not included as well.

Even in a case of the detection area DAR1, DAR2, or DAR3, it is possible to detect the object to be avoided which can come into contact with the rear wheel 20 or the fender thereof, and to detect the object to be avoided in which the rear wheel 20 can be fallen or get caught, which allows achieving the same or the similar effect as described above.

In the above described embodiment, the light axis LA of each of the lens units 91 of the right stereo camera 90, which is oriented toward the diagonal lower side and the diagonal outside (right side), and the light axis LA of each of the lens units 91 of the left stereo camera 90, which is oriented toward the diagonal lower side and the diagonal outside (left side) are shown. In contrast, in such a case where a milliwave sensor is used instead of each of the right and the left stereo cameras 90, it is possible that an antenna or a circuit board of the right milliwave sensor is oriented toward the diagonal lower side and the diagonal outside (right side), and an antenna or a circuit of the left milliwave sensor is oriented toward the diagonal lower side and the diagonal outside (left side). The above described arrangement is useful for improving the detection accuracy in the area at the outside in the vehicle width direction of the front wheels 10 or the rear wheels 20.

The electric mobility vehicle of this embodiment includes the mobility body 30, the front wheels 10 and the rear wheels 20 which are provided at the both sides in the vehicle width direction of the mobility body 30, and the stereo cameras (also referred to as sensors hereinafter) 90 which are attached to the mobility body 30, and at least one of an area at the outside in the vehicle width direction of the front wheels 10 or the rear wheels 20, and the part of the front wheels 10 or the rear wheels 20 and the part of the fenders thereof are included in a detection area of the sensor.

At least one of the area located at the outside in the width direction of the front wheel 10 or the rear wheels 20, which are the omnidirectional wheel, and the part of the front wheel 10 or the rear wheel 20 and the fenders thereof are included in the detection area of the sensor. Since the sensor is attached to the mobility body 30 as described above, the detected results of the stereo cameras 90 are extremely useful for certainly grasping the relationship between the object to be avoided existing in the area and the front wheel 10 or the rear wheel 20. Note that, the object to be avoided induces a person, an obstacle, a wall, a gutter, furniture, and the like.

For example, in order to check the vicinities of the front wheel 10 or the rear wheel 20 on the travel surface located outside the front wheel 10 or the rear wheel 20 in the width direction by eyesight, the driver is required to change posture. In contrast, in such a case where the vicinities of the front wheels 10 or the rear wheels 20 on the travel surface located outside the front wheels 10 or the rear wheels 20 in the width direction is positioned within the detection area of the sensor, the burden of driver to monitor is reduced.

In this embodiment, either the front wheels 10 or the rear wheels 20 are the omnidirectional wheel.

Unlike the normal wheels, there is a case where the omnidirectional wheel moves in the width direction more than expected, and therefore, certainly grasping the relationship between the object to be avoided, which exists in the area located outside the front wheel 10 or the rear wheel 20, which is the omnidirectional wheel, in the width direction and the front wheel 10 or the rear wheel 20 is useful for sensing that the electric mobility vehicle is approaching to the object to be avoided.

In this embodiment, in a plain view, the position located above the rotation center of the front wheel 10 or the rear wheel 20, or the upper surface of the fender which corresponds to the position above the rotation center is positioned within the detection area DA of the sensor.

The detected result of the sensor which is arranged as described above allows more certain grasping of the relationship between the front wheel 10 or the rear wheel 20 and the object to be avoided existing at the outside in the width direction thereof.

In this embodiment, the sensor is the stereo camera 90 having the pair of lens units 91 for obtaining the parallax images, and the pair of lens units 91 are arranged in the vertical direction and/or in the front-rear direction of the mobility body 30 with each other.

The detection area of the stereo camera 90 is an area where the image caption area of one of the lens units 91 and that of the other of the lens units 91 are overlapped. Therefore, the above described configuration, in which the pair of lens units 91 are positioned so as to be arranged in the vertical direction with each other, is useful for reducing or eliminating the blind spot located outside the front wheels 10 or the rear wheels 20 in the width direction.

In this embodiment, the sensor is the stereo camera 90 having the pair of lens units 91 for obtaining the parallax images, as shown in Fig. 8, for example, one of distal end lenses 91a of the pair of lens units 91 is arranged at the upper side with respect to the other of the distal end lenses 91a.

The detection area of the stereo camera 90 is an area where the image caption area of one of the lens units 91 and that of the other of the lens units 91 are overlapped. Therefore, the above described configuration, in which one of the distal end lenses 91a of the pair of lens units 91 is arranged at the upper side with respect to the other of the distal end lenses 91a, is advantageous for reducing or eliminating the blind spot located outside the front wheels 10 or the rear wheels 20 in the width direction.

In this embodiment, as shown in Fig. 8, for example, one of the distal end lenses 91a of the pair of lens units 91 is located at the vehicle front side relative to the other of the distal end lenses 91a.

With this configuration, in general, the light axes LA of the pair of lens units 91 is oriented downwardly, and one of the distal end lenses 91a of the pair of lens units 91 is positioned at the vehicle front side relative to the other of the distal end lenses 91a.

In this embodiment, with the above described configuration, the light axis LA of each of the lens units 91 extends diagonally toward the outside in the width direction.

Due to this configuration, the distal end lens 91a of each of the pair of lens units 91 diagonally face the front side of the electric mobility vehicle and diagonally face the travel surface of the electric mobility vehicle. By this, improvement of the detection accuracy of structures around the electric mobility vehicle is expected. Also, by using this configuration, a wider area located outside the front wheels 10 or the rear wheels 20 in the width direction is positioned within the detection area of the stereo cameras 90. The above described configuration is extremely useful for certainly grasping the relationship between the object to be avoided existing at the outside in the width direction of the front wheel 10 or the rear wheel 20 and the front wheel 10 or the rear wheel 20.

In this embodiment, the two sensors are provided, and at least one of the part of the right front wheel 10 or the rear wheel 20, or the part of the fender thereof is positioned within the detection area DA of one of the two sensors, and at least one of the part of the left front wheel 10 or the rear wheel 20, or the part of the fender thereof is positioned within the detection area DA of the other one of the two sensors.

By using this configuration, whether or not the object to be avoided exists at the outside in the width direction at both of the left and the right sides is monitored. Since it is difficult for the driver to certainly grasp all of the objects to be avoided located at both of the left and the right sides by eyesight, the above described configuration is extremely useful in the house and the office.

In this embodiment, an existing area of the sensor in the vehicle width direction is overlapped with an existing area of the front wheels 10 or that of the rear wheels 20 in the vehicle width direction, or the sensor is arranged at the above the travel surface located at the outside in the vehicle width direction with respect to the front wheels 10 or the rear wheels 20. The above described configuration is useful for reducing the blind spot located at the outside in the width direction of the front wheels 10 or the rear wheels 20.

In this embodiment, the sensor is attached at the arm rests 43a or the control arms 43, and the arm rests 43a and the control arms 43 are used by the driver so as to place at least one of his/her arms and hands.

It is often the case that each of the controls arms 43 is arranged at a positon located at the outside in the width direction with respect to the torso of the driver who is seated on the electric mobility vehicle. Also, it is often the case that each of the controls arms 43 is arranged at a position located at the outside in the width direction with respect to the thighs of the driver who is seated on the electric mobility vehicle. For that reason, the above described configuration reduces the possibility that the body of the driver interrupts the detection area DA of each of the sensors.

Also, the sensor may be attached to the pole 47 which extends from the vicinity of the seat surface of the mobility body 30 toward the upper side.

In such a case where the sensor is attached to the pole 47 as described above, it is easy to adjust the position of the sensor in the vertical direction. For that reason, in response to place of use, use status, figure of the driver, and the like, position of the sensor in the vertical direction is suitably adjusted. Therefore, this configuration is useful for accurately monitoring whether or not there is the object to be avoided at the outside in the width direction of the front wheels 10 or the rear wheels 20.

The sensor may be attached to an upper side relative to a spring of the suspension 12 of the front wheel 10 or the rear wheel 20 of the mobility body 30.

By using the above described configuration, effect which is given by the vibration, which is input from the travel surface to the front wheels 10 or the rear wheels 20, to the sensor can be reduced.

The sensor may be attached to a lower side relative to the spring of the suspension 12 of the front wheel 10 or the rear wheel 20 of the mobility body 30.

By using this configuration, the vibration which is input from the travel surface to the front wheel 10 or the rear wheel 20 is input to the sensor without being reduced by the suspension 12 of the front wheel 10 or the rear wheel 20. However, with this configuration, it is possible to monitor the condition of the travel surface from even closer.

In this embodiment, the two sensors are attached to the mobility body 30 so as to be symmetrical to each other.

By using this configuration, the pair of sensors monitor whether or not there is the object to be avoided at the outside in the width direction of both of the left and the right front wheels 10 or the rear wheels 20. It is difficult for the driver to certainly grasp all of the objects to be avoided at both of the left and the right sides by eyesight, therefore, the above described configuration is extremely useful in the house or the office.

Also, by attaching the two sensors at the mobility body 30 so as to be symmetrical, it is easy to match the image data, the distance data, and the like which are detected by each of the two sensors with each other, and which is extremely important for performing the detection accurately.

The stereo camera 90 used in this embodiment is a stereo camera for being attached to electric mobility vehicle which is designed for one person to sit and ride, and the stereo camera 90 includes the pair of lens units 91 for obtaining the parallax images, and the camera main body 92 which supports the pair of lens units 91, and the camera main body 92 is attached to the electric mobility vehicle so that the light axis LA of each of the lens units 91 extends diagonally and downwardly.

With the stereo camera 90 having the above described structure, the pair of lens units 91 diagonally face the front side of the electric mobility vehicle and the travel surface of the electric mobility vehicle, therefore, it is expected that the detection efficiency of construction around the electric mobility vehicle is improved.

The camera main body 92 is attached to the electric mobility vehicle so that the light axis LA of each of the pair of lens units 91 respectively extends toward the outside and also the diagonally forward direction of the electric mobility vehicle, or toward the outside and also the diagonally rear side of the electric mobility vehicle.

With this configuration, the pair of lens units 91 diagonally face the front side of the electric mobility vehicle and the travel surface of the electric mobility vehicle, therefore, it is expected that the detection accuracy of the construction around the electric mobility vehicle is improved.

The evading operation performed by the electric mobility vehicle of this embodiment includes at least one of reduction of the rotation speed of the motors 50, stopping the motors 50, and controlling each of the motors 50 so as to limit the electric mobility vehicle from moving toward a side of the object to be avoided.

Reduction of the rotation speed of the motors 50, stopping the motors 50, and limiting the motors 50 from moving toward the side of the object to be avoided are advantageous for preventing the electric mobility vehicle from coming into contact with the object to be avoided, and from falling. Also, limiting the electric mobility vehicle from moving toward the side of the object to be avoided is extremely advantageous for driving the electric mobility vehicle safely, and for reducing stress of the driver who is mostly restricted.

An electric mobility vehicle in accordance with a second embodiment of the present invention will be explained below.

The electric mobility vehicle according to the second embodiment includes a configuration for protecting the stereo cameras 90 of the electric mobility vehicle of the first embodiment and those of the modified example, and light emission portions 300 provided in a manner that the light emission portion substantially surrounds the stereo camera 90. In the second embodiment, configuration which is the same as or similar to that of the first embodiment is denoted by the same reference numerals, and the explanation thereof is omitted.

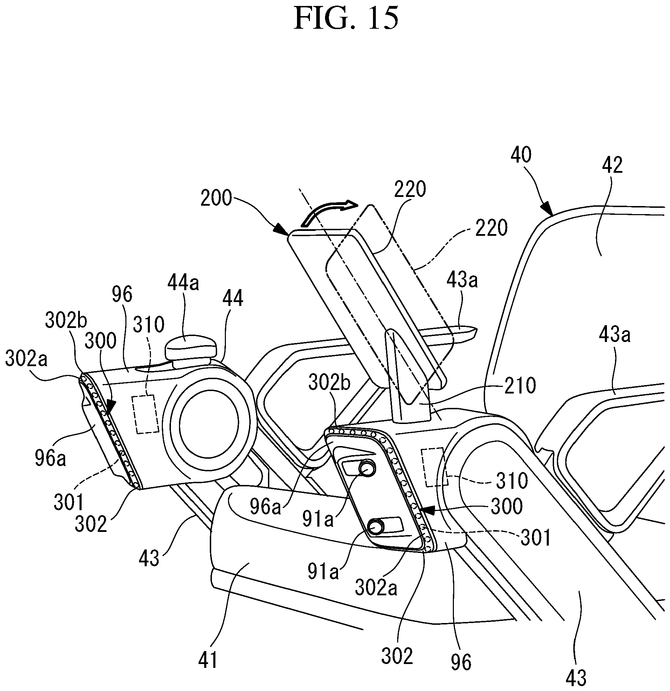

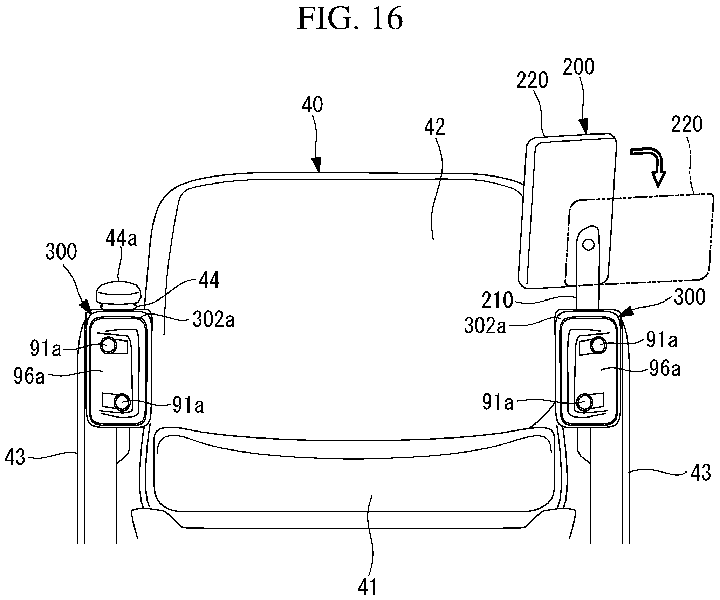

In the second embodiment, as shown in Figs. 15 and 16, a display device 200 which protrudes from the upper end surface of the left control arm 43 toward the upper side is provided. In this embodiment, as shown in Figs. 15 and 16, a cover member 96 of the stereo cameras 90 is respectively fixed to the upper end side of each of the pair of control arms 43. The cover member 96 is the part of the stereo camera 90 and is also the part of the control arm 43. In the second embodiment, the cover member 96 is integrated with the control arm 43, however, the cover member 96 may be formed separately from the control arm 43, and the cover member 96 may be attached to the control arm 43.

A cover front potion 96a is provided at the vehicle front side of the cover members 96. The stereo cameras 90 obtain images via the cover front portions 96a, or the distal end lenses 91a of the lens units 91 of each of the stereo cameras 90 are exposed via a hole of the cover front portions 96a, and by this, the stereo cameras 90 obtain images. The light emitting portion 300, which is in a ring shape, is provided around the cover front portion 96a in each of the cover members 96. The light emitting portion 300 includes light emitting element portions 301 which are arranged so as to surround the distal end lenses 91a of the pair of lens units 91 of the stereo camera 90 when viewed from the vehicle front side, and a transparent cover member 302 which seems that the transparent cover member 302 surrounds the distal end lenses 91a of the pair of lens units 91 of the stereo camera 90 when viewed from the vehicle front side, and which covers the light emitting element portion 301. The light emitting element portions 301 are composed of a plurality of light emitting elements (LED), for example.

The light emitting element portions 301 emit light in a plural kinds of color. The light emitting element portions 301 may be composed of a plural kinds of LEDs, and the light emitting element portions 301 may be composed of a plurality of LEDs each of which can emit light in plural kinds of color.

As shown in Figs. 15 and 16, the transparent cover member 302 includes a front surface portion 302a which can be seen from the vehicle front side, and an upper surface portion 302b which can be seen from the above. Therefore, the light emitting portions 300 can be seen by eyesight when viewed from the above, and can also be seen by eyesight when viewed from the front side of the vehicle.

In the cover member 96, a light emission controller 310 which controls the light emitting element portions 301 is stored. The light emission controller 310 includes a processor such as a CPU and the like, and a memory such as a non-volatile storage and the like, and in the memory, a program for controlling light emission of the light emitting element portions 301 is stored.

The light emission controller 310 is connected to the controller 80, and light emission state of the light emitting element portions 301 is controlled on the basis of control signals from the controller 80.

In a first example, the controller 80 detects an object which can be an obstacle for the electric mobility vehicle from moving on the basis of the detected results of the sensors, such as the stereo cameras 90 and the like, and on the basis of whether or not there is the detected object, the controller 80 controls the light emitting element portions 301 at the right side and the light emitting element portions 301 at the left side, respectively. For example, when the object exists at the left front side or the left side of the electric mobility vehicle, the light emission state of the light emitting element portions 301 of the light emitting portion 300 of the left control arm 43 is changed.

In a second example, the controller 80 controls the right light emission element portions 301 and the left light emitting element portions 301, respectively, in response to the driving state of the electric mobility vehicle by the controller 80. For example, in order that the controller 80 moves the electric mobility vehicle toward the left front side or the left lateral side, the controller 80 changes the light emitting state of the light emission element portions 301 of the light emission portion 300 of the left control arm 43.

The change in the light emitting state includes change in color of the emitted light of the light emission element portions 301, change in patterns of the color of the emitted light, change in amount of light from the light emission element portions 301, and the like. The change in the color of the emitted light includes change in the color of the emitted light of all of the light emission element portions 301 from blue to red, change in the color of the emitted light of the light emission element portions 301 located at a side close to the detected object, or located at a side close to the travel direction from blue to red, gradually change the color of the emitted light of the light emission element portions 301 from a part of the light emission element portions 301 to the other parts thereof, and the like. The change in the patterns of the color of the emitted light includes change the light emission element portions 301 from a lighting state to a flickering state, change a state of the light emission element portions 301 from a state where all of the LEDs of the light emission element portions are lighted to a state where a part of the LEDs are lighted, or a state where a plurality of the LEDs are sequentially lighted, and the like.

The display device 200 includes a fixing member 210 extending from an upper end surface of the cover member 96, which is a part of the left control arm 43, toward an upper side, and a display 202 supported by the left control arm 43 or the cover member 96 through the fixing member 210. In one example, the display 220 is a tablet computer, however, any other known display devices may be used. In this embodiment, the fixing member 210 is a part of the display device 200, however, the fixing member 210 may be provided separately from the display device 200.

Moreover, the display 220 may be supported by the left control arm 43 or the cover member 96 so that the display 220 extends from the upper end surface of the cover member 96 toward the above. Also, the fixing member 210 or the display 220 may extend from the upper end surface of the left control arm 43 toward the above.

In any of the above described cases, the fixing member 210 or the display 220 is provided at the vehicle front side relative to the setting portion 45 of the left control arm 43. In other words, the fixing member 210 or the display 220 is provided at the vehicle front side relative to the hand of the driver, which is placed on the left control arm 43, and in one example, the setting portion 45 is located at a position between the fixing member 210 or the display 220 and the hand of the driver.

Information is transmitted from the controller 80 to the display 220 by a cable or wireless link, the display 220 displays the received information. For example, the information includes at least one of information of driving speed of the electric mobility vehicle, information related to the state of the battery BA, information of a position of an obstacle detected by the sensor, such as the stereo camera 90 or the like, information of determination results of whether or not the obstacle interrupts the driving, map information, and information of driving path.

Note that, it is also possible that the operation portion 44 and the setting portion 45 are provided at the upper end surface of the pair of arm rests 43a, instead of the pair of control arms 43, and the control arms 43 are not provided. In this case, for example, the stereo camera 90 and the cover member 96 thereof are respectively provided at the front end side of the pair of arm rests 43a. The cover member 96 is also a part of the arm rest 43a.

In this configuration, the display device 200 is supported by the left arm rest 43a or the cover member 96 which is the part of the left arm rest 43a, and the fixing member 210 or the display 220 of the display device 200 extends from the upper surface of the left arm rest 43a or the upper surface of the cover member 96 toward the upper side.

Also, the display device 200 may be supported by the right control arm 43, the cover member 96 attached thereto, the right arm rest 43a, or the cover member 96 attached thereto in the same or the similar manner as described above.

Moreover, when the setting portion 45 is provided in the right control arm 43 or the right arm rest 43a, and the operation portion 44 is provided in the left control arm 43 or the left arm rest 43a, the display device 200 may be supported by the right control arm 43, the cover member 96 attached thereto, the right arm rest 43a, or the cover member 96 attached thereto.

As described above, in the second embodiment, for example, the display device 200 or the fixing member 210 thereof are provided as a protrusion on the upper surface of the left control arm 43 or the upper surface of the left arm rest 43a, and the display 200 or the fixing member 210 protrudes from the upper surface toward the upper side. Also, the display device 200 or the fixing member 210 is located at the vehicle front side relative to the hand of the driver placed on the control arm 43 or the arm rest 43a.

Therefore, the display device (protrusion) 200 or the fixing member (protrusion) 210 interrupts the hand of the driver placed on the control arm 43 or the arm rest 43a from moving toward the vehicle front side, which reduces or eliminates the possibility that the hand of the driver is positioned within a field of vision of the stereo camera 90 provided at the upper end side and the front end portion of the control arm 43, or the front end portion of the arm rest 43a. It is not preferable that the cover front portion 96a or the lens units 91 positioned within the field of vision of the stereo camera 90 get dirty by the hand of the driver, however, this possibility is also reduced or eliminated due to the display device 200 or the fixing member 210.

Also, in the second embodiment, for example, the setting portion 45 is provided at the upper surface of the left control arm 43 or the upper surface of the left arm rest 43a, and the setting portion 45 is arranged at the vehicle rear side relative to the display device 200 or the fixing member 210, and the setting portion 45 is arranged in the vehicle front-rear direction with the display device 200 or the fixing member 210.

When this configuration is adopted, the hand of the driver is placed at the vehicle rear side relative to the display device 200 or the fixing member 210, and the hand is arranged in the vehicle front-rear direction with the display device or the fixing member 210. This is advantageous for reducing the possibility that the cover front portion 96a gets dirty by the hand of the driver, or the lens units 91 of the stereo camera 90 gets dirty by the hand of the driver.

Also, in the second embodiment, for example, the operation portion 44 is provided at the upper end portion of the right control arm 43, and when the operation lever 44a of the operation portion 44 is displaced toward the front side, the electric mobility vehicle moves forward. At the time of driving, the driver holds the operation laver at all time, therefore, the possibility that the hand which operates the operation portion 44 is located within the field of vision of the stereo cameras 90 is relatively low, and the possibility that the cover front portion 96a or the lens units 91 of the stereo camera 90 gets dirty by the hand operating the operation portion 44 is relatively low.

Also, in the second embodiment, the controller 80 changes a light emission state of the pair of light emission portions 300 in response to the detected results of the sensor, such as the stereo camera 90, or the control state of the electric mobility vehicle by the controller 80.

For example, when the light emission state of the pair of light emission portions 300 is changed in response to the detected results of the sensor, a person around the electric mobility vehicle can recognize that he or she may interrupt the movement of the electric mobility vehicle.

For example, the controller 80 changes the light emission state of the light emission portions 300 in response to the detection of the sensor when the sensor, such as the stereo camera 90, detects an object which may be the obstacle for the electric mobility vehicle from moving.

Also, in the second embodiment, the light emission portions 300 are provided in a manner so as to substantially surround the sensors, such as the stereo camera 90. Since the light emission portions 300, which are eye catching, are provided around the sensors such as the stereo cameras 90, a person around the electric mobility vehicle tends not to notice the sensors such as the stereo cameras 90. This is useful for improving impression of the electric mobility vehicle held by the people around the vehicle.

Also, in the second embodiment, the light emission portion 300 is in a substantially ring shape around the sensor such as the stereo camera 90. With this configuration, the people around the electric mobility vehicle have more favorable impression from the electric mobility vehicle.

Further, in the second embodiment, the light emission portions 300 can be seen by eyesight when viewed from the above, and can also be seen by eyesight when viewed from the front side of the vehicle. Therefore, even in a state where the control arms 43 or the arm rests 43a of the electric mobility vehicle are located at a position lower than eyes of people around the electric mobility vehicle, the people around the electric mobility vehicle can see the light emission state of the light emission portion 300 easily and certainly.

Also, the controller 80 may change the light emission state of the light emission portions 300 in response to the driving mode of the electric mobility vehicle. For example, when the electric mobility vehicle is in a manual driving mode, the electric mobility vehicle illuminates the light in color which is different with respect to the color of the light emission portions 300 in an automatic driving mode. Also, when the electric mobility vehicle moves toward a predetermined position by the automatic driving without a passenger, the electric mobility vehicle is in an unavailable state. In the above described controlled driving mode, the light emission portions 300 are illuminated in color different from that in the automatic driving mode and that in the automatic driving mode.

Also, in the second embodiment, instead of the stereo camera 90, other kinds of sensor, such as a milliwave sensor and the like may be provided in the pair of control arms 43, respectively, in the same or similar manner as the first embodiment.

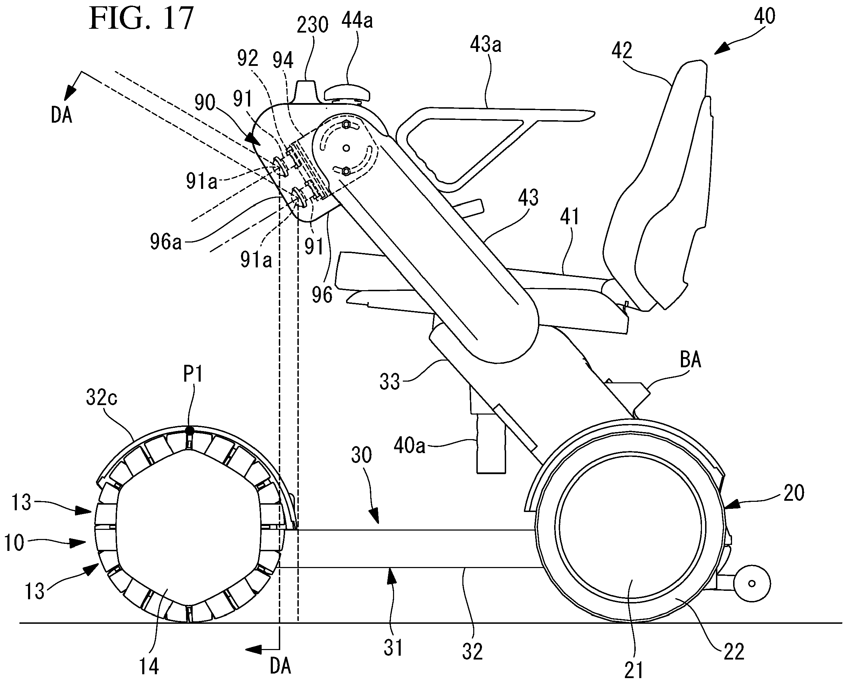

Also, in the second embodiment, as shown in Figs. 17, instead of the display device 200, a protrusion 230 may be provided on the upper surface of the left control arm 43 or the cover member 96. In this case also, the protrusion 230 extends from the upper end surface of the left control arm 43 toward the above, or extends from the upper end surface of the cover member 96, which is the part of the left control arm 43, toward the above. The preferable dimension of the protrusion 230 in the vehicle width direction is more than 1/3 of the dimension of the left control arm 43 in the vehicle width direction, and more than 1/2 is more preferable. Also, the preferable protruding height of the protrusion 230 from the upper end surface is more than 1.5 cm, and more than 3cm is more preferable. Note that, in the example of Fig. 17, the stereo camera 90 obtains images via the cover front portion 96a.

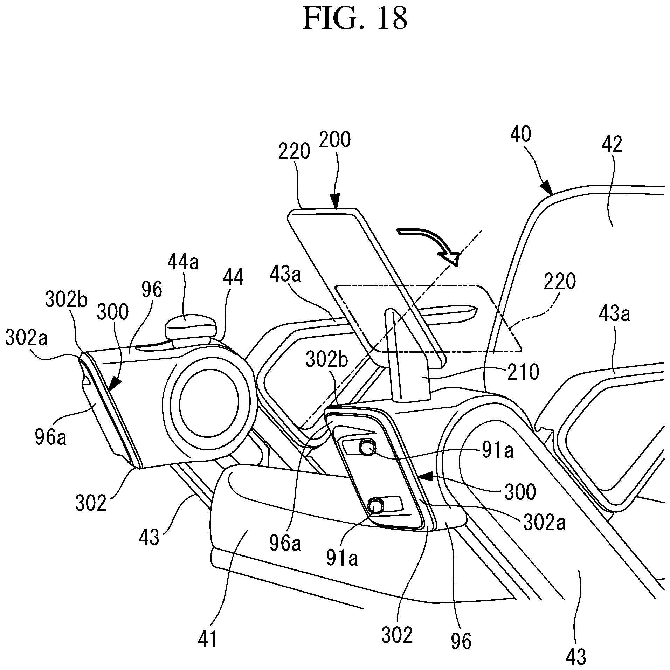

Moreover, in the second embodiment, as shown by the two dotted lines in Fig. 15, the display 220 may be supported by the fixing member 210 in a swingable manner around an axis extending in an up-down direction. In this case, an angle formed between the axis line, which extends in the up-down direction, and the vertical direction is smaller than 40 degrees. Also, as shown in Figs. 16 and 18, the display 220 may be supported by the fixing member 210 in a swingable manner around an axis extending in the vehicle front-rear direction. In this case, an angle formed between the axis line extending in the vehicle front-rear direction and the horizontal direction is smaller than 40 degrees.

In these cases, even when the driver of the electric mobility vehicle accidentally applies force to the display 220, it is possible to prevent the display 220, the fixing member 210, and the like from being damaged, and it is also possible to prevent the driver from being injured.

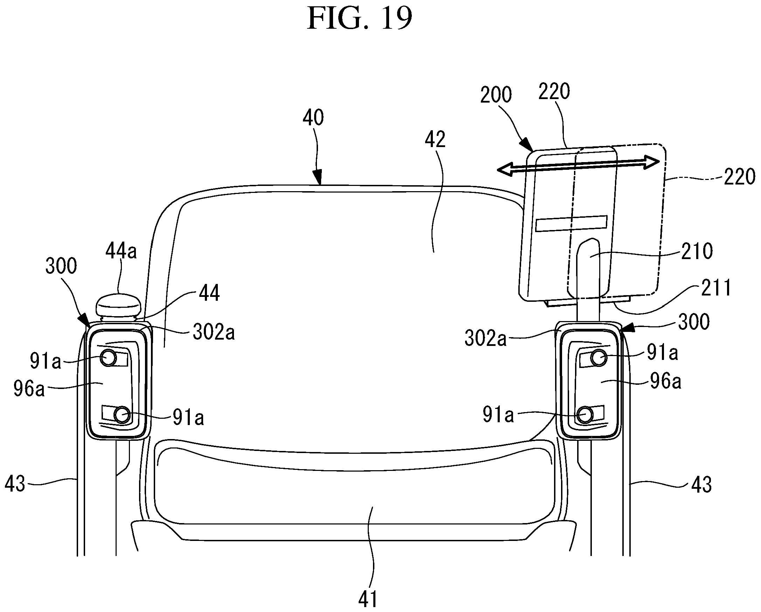

Further, in the second embodiment, as shown in Fig. 19, the display 220 may be movable in the vehicle width direction with respect to the fixing member 210. For example, a rail 211 extending in the vehicle width direction is provided in the fixing member 210, and the display 220 is supported by the rail in the movable manner. In this case, when the display 200, which was attached to the left control arm 43, is attached to the right control arm 43, the position of the display 220 is adjustable in the vehicle width direction with respect to the fixing member 201.

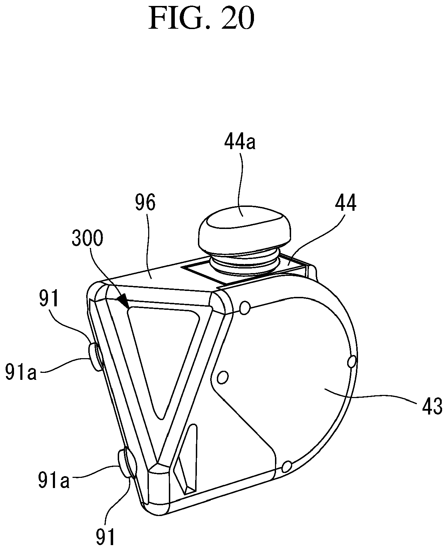

Also, in the second embodiment, as shown in Fig. 20, it is also possible to provide the light emission portion 300, which is not in the ring shape, at the upper end portion and also the front surface side of the control arms 43. The light emission portion 300, which is not in the ring shape, can also be provided at the front surface side of the arm rests 43a. In these cases also, the same or the similar effect as in the case where the light emission portion 300 is in the ring shape can be achieved.

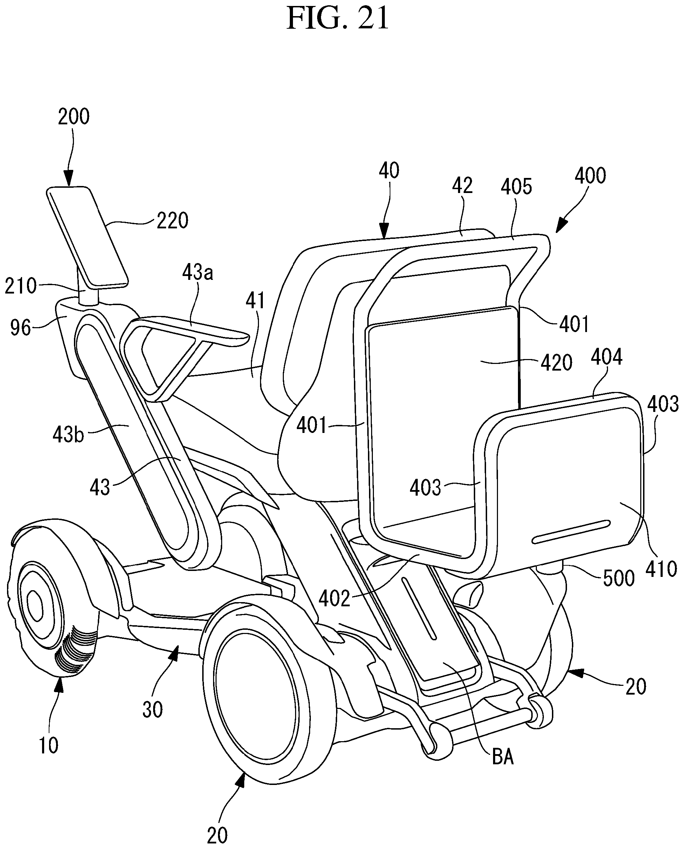

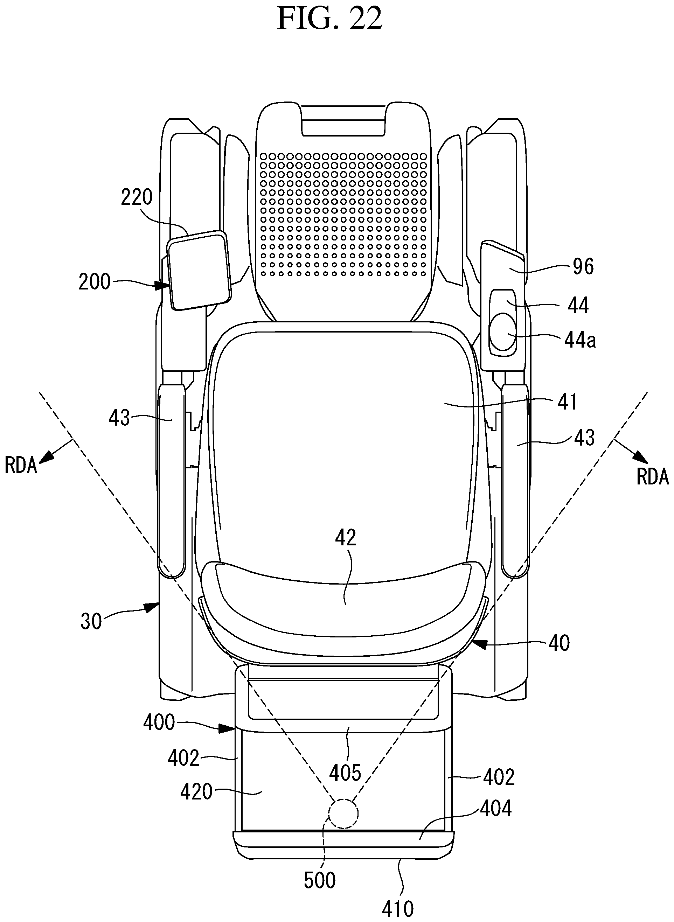

In the above described embodiments, as shown in Figs. 21 and 22, a luggage basket 400 may be attached to the seat unit 40 of the mobility body 30, and the luggage basket 400 may be arranged at the rear side of the seat unit 40. The luggage basket 400 includes a pair of first frame portions 401 which extend in the vertical direction and which are fixed to the seat unit 40, a pair of second flame portions 402 which extend from the lower ends of the first flame portions 401 toward the vehicle rear direction, a pair of third flame portions 403 which extend from the ends of the vehicle rear side in the second flame portions 402 toward the above, and a fourth flame portion 404 which connect the upper ends of the third flame portions 403. Also, a grip portion 405 which extends from the upper ends of the pair of first flame portions 401 toward the upper side is also provided in the luggage basket 400. The grip portion 405 is useful when a person pushes the electric mobility vehicle.

Also, a back panel 410 which substantially closes an area surrounded by the third flame portions 403 and the fourth flame portions 404 is provided. Moreover, a plate member 420 is fixed between the left first flame portion 401 and the second flame portion, and the right first flame portion 401 and the second flame portion 402. At least the back surface of the back panel 410 is made of a plastic member. This plastic member and a plastic material forming a surface 43b located at the outside in the vehicle width direction of the left and the right control arms 43 are in color of the same color system. For example, both of the plastic members are in bluish color. Alternatively, both of the plastic members are in whitish color. Alternatively, both of the plastic materials are in greenish color. Instead of the above described, the plastic member forming the surface located at the outside in the vehicle width direction of the arm rests 43a and the plastic member forming the back surface of the back panel 410 may be in color of the same color system. Especially, when most of the parts of the mobility body 30 are in blackish color or in grayish color, the surface 43b of the control arms 43 at the outside and the back surface of the back panel 410 stand out with respect to the other portions of the electric mobility vehicle. That is to say, it is preferable that both of the plastic members are in the color other than the blackish color or the grayish color.

A small sized carry bag, a travelling bag, and the like are loaded in the luggage basket 400. A known LiDAR (Light Detection and Ranging or Laser Imaging Detection and Ranging) 500 is attached to the lower surface of the luggage basket 400. Alternatively, the LiDAR 500 is fixed to the body 31 by means of a flame, a bar, a plate, and the like, so that the LiDAR 500 is placed below the luggage basket 400. The LiDAR 500 scans a laser beam, and detects the laser beam which is reflected by a surrounding object, and by this, the LiDAR 500 detects the surrounding object. As shown in Fig. 22, the LiDAR 500 is attached to the lower surface of the luggage basket 400 which is arranged at the rear side of the seat unit 40, and a position of the LiDAR 500 is distant from the electric mobility vehicle, which broadens a detection area RDA of the LiDAR by that much.

Also, the plastic member which forms the back surface of the back panel 410 and the plastic member which forms the outer surfaces (side surfaces) 43b located at the outside in the vehicle width direction of the left and the right control arms 43 or the arm rests 43a are respectively in colors of the same kind of color. For that reason, the back surface of the luggage basket 400, and the control arms 43 or the arm rests 43a having a sense of unity catch the eyes of a person who sees the electric mobility vehicle, and therefore, the parson hardly notices the LiDAR 500 attached at the lower surface of the luggage basket 400.

### {Reference Signs List}

- 10: front wheel (wheel)
- 11: axle (wheel)
- 12: suspension
- 13: roller
- 14: hub
- 20: rear wheel
- 30: mobility body
- 31: body
- 32: base portion
- 33: seat support portion
- 40: seat unit
- 43: control arm
- 43a: arm rest
- 44: operation portion
- 44a: operation lever
- 45: setting portion
- 46: notification device
- 47: pole
- 50: motor
- 60: control unit
- 70: motor driver
- 80: controller
- 81: control section
- 82: memory
- 82a: travel control program
- 90: stereo camera (sensor)
- 91: lens unit
- 92: camera main body
- 93: imaging sensor
- 94: stay
- 96: cover member
- 96a: cover front portion
- 200: display device
- 210: fixing member
- 220: display
- 300: light emission portion
- 301: light emission element portion
- 302: transparent cover member
- 302a: front surface portion
- 302b: upper surface portion
- DA: detection area
- RDA: detection area

## Claims

1. An electric mobility vehicle on which one person is to be seated to ride, the electric mobility vehicle comprising:
a mobility body;
wheels provided at both sides in a vehicle width direction of the mobility body; and
a sensor attached to the mobility body, wherein
an area which is located outside the wheel in the vehicle width direction, and at least one of a part of the wheel and a part of fender of the wheel are positioned within a detection area of the sensor.

2. The electric mobility vehicle according to claim 1, wherein a position located right above a rotation center of the wheel or an upper surface of the fender corresponding to the position is positioned within the detection area of the sensor.

3. The electric mobility vehicle according to claim 1 or 2, wherein the sensor is a stereo camera having a pair of lens units which obtain parallax images, and the pair of lens units are arranged, with each other, in a vertical direction and/or in a front-rear direction of the mobility body.

4. The electric mobility vehicle according to claim 1 or 2, wherein the sensor is a stereo camera having a pair of lens units which obtain parallax images, and a distal end lens of one of the pair of lens units is arranged at an upper side relative to a distal end lens of the other of the pair of lens units.

5. The electric mobility vehicle according to claim 4, wherein the distal end lens of the one of the pair of lens units is located at a front side relative to the distal end lens of the other of the pair of lens units.

6. The electric mobility vehicle according to any one of claims 3 to 5, wherein a light axis of each of the lens units extends downwardly toward an outside in the vehicle width direction in a diagonal manner.

7. The electric mobility vehicle according to any one of claims 1 to 6, wherein the electric mobility vehicle comprises two pieces of the sensors, and wherein at least one of a part of the wheel at a right side and a part of the fender thereof is positioned within the detection area of one of the two sensors, and at least one of a part of the wheel at a left side and a part of the fender thereof is positioned within the detection area of the other of the two sensors.

8. The electric mobility vehicle according to any one of claims 1 to 7, wherein an existing area in the vehicle width direction of the sensor is overlapped with an existing area of the wheel in the vehicle width direction, or the sensor is arranged above a travel surface located outside the wheel in the vehicle width direction.

9. The electric mobility vehicle according to any one of claims 1 to 8, wherein the sensor is attached to an arm rest or a control arm, and the arm rest and the control arm are ones on which a driver places at least one of an arm or a hand thereof.

10. The electric mobility vehicle according to any one of claims 1 to 9, wherein the sensor is attached to a pole extending from a vicinity of a sitting surface of the mobility body toward an upper side.

11. The electric mobility vehicle according to any one of claims 1 to 6, 8, and 9, wherein the electric mobility vehicle comprises two pieces of the sensors, and at least one of a part of the wheel at a right side and a part of the fender thereof is positioned within the detection area of one of the two sensors, and at last one of a part of the wheel at a left side and a part of the fender thereof is positioned within the detection area of the other of the two sensors, and
the two sensors are attached to the mobility body so as to be symmetrical to each other.

12. The electric mobility vehicle according to any one of claims 1 to 11, wherein the wheel is an omnidirectional wheel.

13. The electric mobility vehicle according to any one of claims 3, 4, 5, and 6, wherein the stereo camera is attached to the electric mobility vehicle so that light axes of the pair of lens units extend toward an outside and also a diagonally front side of the electric mobility vehicle, or toward an outside and also a diagonally rear side of the electric mobility vehicle.

14. The electric mobility vehicle according to any one of claims 1 to 11 and 13 comprising:
a motor which drives another wheel, which is provided in the mobility body, or the wheels; and,
a control unit which controls the motor, wherein
the wheels are omnidirectional wheels, and,
the control unit is configured to perform a predetermined evading operation when an object to be avoided is detected in the area located outside the wheel or in a predetermined area in the detection area based on detected images or detected values of the sensor.

15. The electric mobility vehicle according to claim 14, wherein the predetermined evading operation includes at least one of reduction of rotation speed of the motor, stopping the motor, and controlling the motor for restricting movement of the electric mobility vehicle toward a side of the object to be avoided.

16. The electric mobility vehicle according to any one of claims 1 to 15 comprising:
a pair of control arms or a pair of arm rests which are provided at both sides in the vehicle width direction of the mobility body;
a controller; and
a pair of light emission portions respectively provided on front end sides of the pair of control arms or front end sides of the pair of arm rests, wherein
the control arms or the arm rests are ones on which a driver places hands thereof, and
the controller changes a light emission state of the pair of light emission portions in response to a detected result of the sensor or a control state of the electric mobility vehicle by the controller.

17. The electric mobility vehicle according to claim 16, wherein the controller changes the light emission state of the light emission portions in response to the detected result of the sensor when the sensor detects an object which can be an obstacle for the electric mobility vehicle to move.

18. The electric mobility vehicle according to claim 16 or 17, wherein the light emission portion is provided in a manner in which the light emission portion substantially surrounds the sensor.

19. The electric mobility vehicle according to any one of claims 16 to 18, wherein each of the light emission portions can be seen when viewed from an above side, and can also be seen when viewed from a vehicle front side.
